# EUROPEAN PATENT APPLICATION

(11) **EP 4 472 316 A1**
(43) Date of publication of application: **04.12.2024**
(21) Application number: 22928303.1
(22) Date of filing: 18.11.2022
(51) Int. Cl.: H04W 72/04

(54) **DATA TRANSMISSION METHOD AND APPARATUS**

(30) Priority: 25.02.2022 CN 202210175816
(71) Applicant: Huawei Technologies Co., Ltd., Shenzhen, Guangdong 518129 (CN)
(72) Inventor: CAO, Youlong, Shenzhen, Guangdong 518129 (CN); QIN, Yi, Shenzhen, Guangdong 518129 (CN); CHEN, Erkai, Shenzhen, Guangdong 518129 (CN); DOU, Shengyue, Shenzhen, Guangdong 518129 (CN)
(74) Representative: Isarpatent
(86) International application number: PCT/CN2022/132965
(87) International publication number: WO 2023/160043

(57) **Abstract**

A data transmission method and an apparatus are provided, so that data transmission on some preconfigured transmission occasions can be adjusted in time. In this way, the preconfigured transmission occasion can better adapt to a requirement of XR data on a transmission delay and the like, and a preconfigured radio resource can be more efficiently used to improve XR data transmission efficiency, improving user experience.

## Description

This application claims priority to Chinese Patent Application No. 202210175816.2, filed with the China National Intellectual Property Administration on February 25, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

In a wireless communication network, an extended reality (extended reality, XR) technology has advantages such as multiple views and strong interactivity, can provide brand-new visual experience for a user, and has great application value and commercial potential. XR includes technologies such as virtual reality (virtual reality, VR), augmented reality (augmented reality, AR), and mixed reality (mix reality, MR), and can be widely applied to many fields such as entertainment, gaming, healthcare, advertising, industry, online education, and engineering.

XR data is usually transmitted in a form of a picture frame. Different data packets corresponding to a same picture frame usually have a dependency relationship. When a transmission error occurs in some data packets or transmission exceeds a delay budget, the picture frame fails to be transmitted. Therefore, how to efficiently use limited radio resources to improve XR data transmission efficiency is an urgent problem to be resolved.

### SUMMARY

According to a first aspect, an embodiment of this application provides a data transmission method. The method may be performed by a terminal, may be performed by a component (for example, a processor, a chip, or a chip system) of a terminal, or may be implemented by a logical module or software that can implement all or some functions of a terminal. The method includes: receiving configuration information from a network device, where the configuration information is used to configure a plurality of transmission occasions; performing data transmission with the network device on one or more first transmission occasions, where the one or more first transmission occasions are some of the plurality of transmission occasions; receiving adjustment information from the network device; and performing data transmission with the network device on one or more second transmission occasions based on the adjustment information, where the one or more second transmission occasions are some of the plurality of transmission occasions, and the one or more second transmission occasions are different from the one or more first transmission occasions. In the method, the network device may adjust data transmission of the terminal on some preconfigured transmission occasions in time by using the adjustment information, so that the preconfigured transmission occasion can better adapt to a requirement of XR data on a transmission delay and the like, and a preconfigured radio resource can be more efficiently used to improve XR data transmission efficiency, improving user experience.

With reference to the first aspect, in some implementations of the first aspect, the configuration information is semi-persistent scheduling (semi-persistent scheduling, SPS) configuration information, the transmission occasion is an SPS transmission occasion, the first transmission occasion is a first SPS transmission occasion, and the second transmission occasion is a second SPS transmission occasion. The method further includes: receiving first activation information from the network device. The performing data transmission with the network device on one or more first transmission occasions includes: performing data transmission with the network device on the one or more first SPS transmission occasions based on the first activation information. In this implementation, the network device may adjust data transmission of the terminal on some preconfigured SPS transmission occasions in time by using the adjustment information, so that the preconfigured SPS transmission occasion can better adapt to the requirement of the XR data on the transmission delay and the like, and a preconfigured SPS resource can be more efficiently used to improve the XR data transmission efficiency, improving user experience. In addition, in the method, data transmission on another preconfigured SPS transmission occasion is not affected, so that impact on other data transmission is also reduced as much as possible while user experience in receiving XR data is improved.

With reference to the first aspect, in some implementations of the first aspect, the first activation information includes first modulation and coding scheme (modulation and coding scheme, MCS) information, and the adjustment information includes second MCS information. The first MCS information indicates an MCS on each of the one or more first SPS transmission occasions, and the second MCS information indicates an MCS on each of the one or more second SPS transmission occasions. Optionally, the MCS indicated by the second MCS information is lower than the MCS indicated by the first MCS information. For example, a modulation order indicated by the second MCS information is lower than a modulation order indicated by the first MCS information. For another example, a code rate indicated by the second MCS information is lower than a code rate indicated by the first MCS information. For another example, a modulation order indicated by the second MCS information is lower than a modulation order indicated by the first MCS information, and a code rate indicated by the second MCS information is lower than a code rate indicated by the first MCS information. This implementation may be understood as follows: When a latest receiving moment Tlatest1 of a picture frame, a moment Tsecond1 of the second SPS transmission occasion, and retransmission time Tretrans1 corresponding to the second SPS transmission occasion satisfy Tlatest1-Tsecond1 <Tretrans 1, the MCS indicated by the second MCS information included in the adjustment information sent by the network device to the terminal is lower than the MCS indicated by the first MCS information in the first activation information. Optionally, the retransmission time Tretrans1 corresponding to the second SPS transmission occasion is related to a slot configuration of the terminal and a terminal capability. In this implementation, data transmitted on the first SPS transmission occasion and data transmitted on the second SPS transmission occasion may belong to a same picture frame. When the second SPS transmission occasion includes sufficient resources, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1 <Tretrans 1, the adjustment information is used to indicate the terminal that a lower MCS is used on the second SPS transmission occasion. In this way, reliability of data transmission on the second SPS transmission occasion is improved, and a retransmission probability of the data transmitted on the second SPS transmission occasion is reduced. Therefore, a data transmission delay is reduced as much as possible, and user experience in receiving XR data is improved.

With reference to the first aspect, in some implementations of the first aspect, in addition to the first MCS information, the first activation information further includes first frequency domain resource allocation (frequency domain allocation assignment, FDRA) information. In addition to the second MCS information, the adjustment information further includes second FDRA information. The first FDRA information indicates a frequency domain resource on each of the one or more first SPS transmission occasions, and the second FDRA information indicates a frequency domain resource on each of the one or more second SPS transmission occasions. Optionally, frequency domain resources indicated by the second FDRA information are more than frequency domain resources indicated by the first FDRA information. This implementation may be understood as follows: When the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the MCS indicated by the second MCS information included in the adjustment information sent by the network device to the terminal is lower than the MCS indicated by the first MCS information in the first activation information, and the frequency domain resources indicated by the second FDRA information included in the adjustment information are more than the frequency domain resources indicated by the first FDRA information in the first activation information. Optionally, the retransmission time Tretrans1 corresponding to the second SPS transmission occasion is related to the slot configuration of the terminal and the terminal capability. In this implementation, the data transmitted on the first SPS transmission occasion and the data transmitted on the second SPS transmission occasion may belong to the same picture frame. When resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, more resources are allocated to the second SPS transmission occasion. In this way, the reliability of data transmission on the second SPS transmission occasion is improved, and the retransmission probability of the data transmitted on the second SPS transmission occasion is reduced. Therefore, the data transmission delay is reduced as much as possible, and user experience in receiving XR data is improved.

With reference to the first aspect, in some implementations of the first aspect, in addition to the first activation information including the first MCS information and the adjustment information including the second MCS information, first scheduling information is further received from the network device, and data transmission is performed with the network device on a time domain resource other than the plurality of SPS transmission occasions based on the first scheduling information. In this implementation, the data transmitted on the first SPS transmission occasion and the data transmitted on the second SPS transmission occasion may belong to the same picture frame. When the resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, a resource other than the SPS transmission occasion is additionally scheduled for transmitting data of the picture frame. Therefore, the data transmission delay is reduced as much as possible, and user experience in receiving XR data is improved.

With reference to the first aspect, in some implementations of the first aspect, the first activation information is scrambled by using a first radio network temporary identifier (radio network temporary identifier, RNTI), and the adjustment information is scrambled by using a second RNTI. The first RNTI is different from the second RNTI; or the first RNTI is the same as the second RNTI, both the adjustment information and the first activation information include a first field, and the first field in the adjustment information is set to a predetermined value.

With reference to the first aspect, in some implementations of the first aspect, the configuration information is configured grant (configured grant, CG) configuration information, the transmission occasion is a CG transmission occasion, the first transmission occasion is a first CG transmission occasion, and the second transmission occasion is a second CG transmission occasion. Optionally, the performing data transmission with the network device on one or more first transmission occasions includes: performing data transmission with the network device on the one or more first CG transmission occasions based on the CG configuration information. In this implementation, the network device may adjust data transmission of the terminal on some preconfigured CG transmission occasions in time by using the adjustment information, so that the preconfigured CG transmission occasion can better adapt to the requirement of the XR data on the transmission delay and the like, and a preconfigured CG resource can be more efficiently used to improve the XR data transmission efficiency, improving user experience. In addition, in the method, data transmission on another preconfigured CG transmission occasion is not affected, so that impact on other data transmission is also reduced as much as possible while user experience in receiving XR data is improved.

With reference to the first aspect, in some implementations of the first aspect, the CG configuration information may include third MCS information, and the adjustment information may include fourth MCS information. The third MCS information is used to configure an MCS on each of the one or more first CG transmission occasions, and the fourth MCS information indicates an MCS on each of the one or more second CG transmission occasions. Optionally, the MCS indicated by the fourth MCS information is lower than the MCS configured by using the third MCS information. For example, a modulation order indicated by the fourth MCS information is lower than a modulation order configured by using the third MCS information. For another example, a code rate indicated by the fourth MCS information is lower than a code rate configured by using the third MCS information. For another example, a modulation order indicated by the fourth MCS information is lower than a modulation order configured by using the third MCS information, and a code rate indicated by the fourth MCS information is lower than a code rate configured by using the third MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the fourth MCS information included in the adjustment information sent by the network device to the terminal is lower than the MCS configured by using the third MCS information in the CG configuration information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame. When the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the adjustment information is used to indicate the terminal that a lower MCS is used on the second CG transmission occasion. In this way, reliability of data transmission on the second CG transmission occasion is improved, and a retransmission probability of the data transmitted on the second CG transmission occasion is reduced. Therefore, a data transmission delay is reduced as much as possible, and user experience in receiving XR data is improved.

With reference to the first aspect, in some implementations of the first aspect, in addition to the third MCS information, the CG configuration information further includes third FDRA information. In addition to the fourth MCS information, the adjustment information further includes fourth FDRA information. The third FDRA information is used to configure a frequency domain resource on each of the one or more first CG transmission occasions, and the fourth FDRA information indicates a frequency domain resource on each of the one or more second CG transmission occasions. Optionally, frequency domain resources indicated by the fourth FDRA information are more than frequency domain resources configured by using the third FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the fourth MCS information included in the adjustment information sent by the network device to the terminal is lower than the MCS configured by using the third MCS information in the CG configuration information, and the frequency domain resources indicated by the fourth FDRA information included in the adjustment information are more than the frequency domain resources configured by using the third FDRA information in the CG configuration information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame. When resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, more resources are allocated to the second CG transmission occasion. In this way, the reliability of data transmission on the second CG transmission occasion is improved, and the retransmission probability of the data transmitted on the second CG transmission occasion is reduced. Therefore, the data transmission delay is reduced as much as possible, and user experience in receiving XR data is improved.

With reference to the first aspect, in some implementations of the first aspect, in addition to the CG configuration information including the third MCS information and the adjustment information including the fourth MCS information, second scheduling information is further received from the network device, and data transmission is performed with the network device on a time domain resource other than the plurality of CG transmission occasions based on the second scheduling information. In this implementation, the data transmitted on the first CG transmission occasion and the data transmitted on the second CG transmission occasion may belong to the same picture frame. When the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, a resource other than the CG transmission occasion is additionally scheduled for transmitting data of the picture frame. Therefore, the data transmission delay is reduced as much as possible, and user experience in receiving XR data is improved.

With reference to the first aspect, in some implementations of the first aspect, the method further includes: receiving second activation information from the network device. The performing data transmission with the network device on one or more first transmission occasions includes: performing data transmission with the network device on the one or more first CG transmission occasions based on the second activation information. Optionally, the second activation information includes fifth MCS information, and the adjustment information includes sixth MCS information. The fifth MCS information indicates an MCS on each of the one or more first CG transmission occasions, and the sixth MCS information indicates an MCS on each of the one or more second CG transmission occasions. Optionally, the MCS indicated by the sixth MCS information is lower than the MCS indicated by using the fifth MCS information. For example, a modulation order indicated by the sixth MCS information is lower than a modulation order indicated by the fifth MCS information. For another example, a code rate indicated by the sixth MCS information is lower than a code rate indicated by the fifth MCS information. For another example, a modulation order indicated by the sixth MCS information is lower than a modulation order indicated by the fifth MCS information, and a code rate indicated by the sixth MCS information is lower than a code rate indicated by the fifth MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the sixth MCS information included in the adjustment information sent by the network device to the terminal is lower than the MCS indicated by the fifth MCS information in the second activation information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame. When the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the adjustment information is used to indicate the terminal that a lower MCS is used on the second CG transmission occasion. In this way, reliability of data transmission on the second CG transmission occasion is improved, and a retransmission probability of the data transmitted on the second CG transmission occasion is reduced. Therefore, a data transmission delay is reduced as much as possible, and user experience in receiving XR data is improved.

With reference to the first aspect, in some implementations of the first aspect, in addition to the fifth MCS information, the second activation information further includes fifth FDRA information. In addition to the sixth MCS information, the adjustment information further includes sixth FDRA information. The fifth FDRA information indicates a frequency domain resource on each of the one or more first CG transmission occasions, and the sixth FDRA information indicates a frequency domain resource on each of the one or more second CG transmission occasions. Optionally, frequency domain resources indicated by the sixth FDRA information are more than frequency domain resources indicated by using the fifth FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the sixth MCS information included in the adjustment information sent by the network device to the terminal is lower than the MCS indicated by the fifth MCS information in the second activation information, and the frequency domain resources indicated by the sixth FDRA information included in the adjustment information are more than the frequency domain resources indicated by the fifth FDRA information in the second activation information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame. When resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, more resources are allocated to the second CG transmission occasion. In this way, the reliability of data transmission on the second CG transmission occasion is improved, and the retransmission probability of the data transmitted on the second CG transmission occasion is reduced. Therefore, the data transmission delay is reduced as much as possible, and user experience in receiving XR data is improved.

With reference to the first aspect, in some implementations of the first aspect, in addition to the second activation information including the fifth MCS information and the adjustment information including the sixth MCS information, third scheduling information is further received from the network device, and data transmission is performed with the network device on a time domain resource other than the plurality of CG transmission occasions based on the third scheduling information. In this implementation, the data transmitted on the first CG transmission occasion and the data transmitted on the second CG transmission occasion may belong to the same picture frame. When the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, a resource other than the CG transmission occasion is additionally scheduled for transmitting data of the picture frame. Therefore, the data transmission delay is reduced as much as possible, and user experience in receiving XR data is improved.

With reference to the first aspect, in some implementations of the first aspect, the second activation information is scrambled by using a third RNTI, and the adjustment information is scrambled by using a fourth RNTI. The third RNTI is different from the fourth RNTI; or the third RNTI is the same as the fourth RNTI, both the adjustment information and the second activation information include a second field, and the second field in the adjustment information is set to a predetermined value.

According to a second aspect, an embodiment of this application provides a communication method. The method may be performed by a network device, may be performed by a component (for example, a processor, a chip, or a chip system) of a network device, or may be implemented by a logical module or software that can implement all or some functions of a network device. The method includes: sending configuration information to a terminal, where the configuration information is used to configure a plurality of transmission occasions; performing data transmission with the terminal on one or more first transmission occasions, where the one or more first transmission occasions are some of the plurality of transmission occasions; sending adjustment information to the terminal, where the adjustment information indicates data transmission on one or more second transmission occasions, the one or more second transmission occasions are some of the plurality of transmission occasions, and the one or more second transmission occasions are different from the one or more first transmission occasions; and performing data transmission with the terminal on the one or more second transmission occasions.

With reference to the second aspect, in some implementations of the second aspect, the configuration information is SPS configuration information, the transmission occasion is an SPS transmission occasion, the first transmission occasion is a first SPS transmission occasion, and the second transmission occasion is a second SPS transmission occasion. The method further includes: sending first activation information to the terminal, where the first activation information is used to activate data transmission on the one or more first SPS transmission occasions.

With reference to the second aspect, in some implementations of the second aspect, the first activation information includes first MCS information, and the adjustment information includes second MCS information. The first MCS information indicates an MCS on each of the one or more first SPS transmission occasions, and the second MCS information indicates an MCS on each of the one or more second SPS transmission occasions. Optionally, the MCS indicated by the second MCS information is lower than the MCS indicated by the first MCS information. For example, a modulation order indicated by the second MCS information is lower than a modulation order indicated by the first MCS information. For another example, a code rate indicated by the second MCS information is lower than a code rate indicated by the first MCS information. For another example, a modulation order indicated by the second MCS information is lower than a modulation order indicated by the first MCS information, and a code rate indicated by the second MCS information is lower than a code rate indicated by the first MCS information. This implementation may be understood as follows: When a latest receiving moment Tlatest1 of a picture frame, a moment Tsecond1 of the second SPS transmission occasion, and retransmission time Tretrans1 corresponding to the second SPS transmission occasion satisfy Tlatest1-Tsecond1<Tretrans1, the MCS indicated by the second MCS information included in the adjustment information sent by the network device to the terminal is lower than the MCS indicated by the first MCS information in the first activation information. Optionally, the retransmission time Tretrans1 corresponding to the second SPS transmission occasion is related to a slot configuration of the terminal and a terminal capability. In this implementation, data transmitted on the first SPS transmission occasion and data transmitted on the second SPS transmission occasion may belong to a same picture frame. When the second SPS transmission occasion includes sufficient resources, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the adjustment information is used to indicate the terminal that a lower MCS is used on the second SPS transmission occasion. In this way, reliability of data transmission on the second SPS transmission occasion is improved, and a retransmission probability of the data transmitted on the second SPS transmission occasion is reduced. Therefore, a data transmission delay is reduced as much as possible, and user experience in receiving XR data is improved.

With reference to the second aspect, in some implementations of the second aspect, in addition to the first MCS information, the first activation information further includes first FDRA information. In addition to the second MCS information, the adjustment information further includes second FDRA information. The first FDRA information indicates a frequency domain resource on each of the one or more first SPS transmission occasions, and the second FDRA information indicates a frequency domain resource on each of the one or more second SPS transmission occasions. Optionally, frequency domain resources indicated by the second FDRA information are more than frequency domain resources indicated by the first FDRA information. This implementation may be understood as follows: When the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the MCS indicated by the second MCS information included in the adjustment information sent by the network device to the terminal is lower than the MCS indicated by the first MCS information in the first activation information, and the frequency domain resources indicated by the second FDRA information included in the adjustment information are more than the frequency domain resources indicated by the first FDRA information in the first activation information. Optionally, the retransmission time Tretrans1 corresponding to the second SPS transmission occasion is related to the slot configuration of the terminal and the terminal capability. In this implementation, the data transmitted on the first SPS transmission occasion and the data transmitted on the second SPS transmission occasion may belong to the same picture frame. When resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, more resources are allocated to the second SPS transmission occasion. In this way, the reliability of data transmission on the second SPS transmission occasion is improved, and the retransmission probability of the data transmitted on the second SPS transmission occasion is reduced. Therefore, the data transmission delay is reduced as much as possible, and user experience in receiving XR data is improved.

With reference to the second aspect, in some implementations of the second aspect, in addition to the first activation information including the first MCS information and the adjustment information including the second MCS information being sent to the terminal, first scheduling information is further sent to the terminal, where the first scheduling information is used to schedule data transmission on a time domain resource other than the plurality of SPS transmission occasions. Data transmission is performed with the terminal on the time domain resource other than the plurality of SPS transmission occasions. In this implementation, the data transmitted on the first SPS transmission occasion and the data transmitted on the second SPS transmission occasion may belong to the same picture frame. When the resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, a resource other than the SPS transmission occasion is additionally scheduled for transmitting data of the picture frame. Therefore, the data transmission delay is reduced as much as possible, and user experience in receiving XR data is improved.

With reference to the second aspect, in some implementations of the second aspect, the first activation information is scrambled by using a first radio network temporary identifier RNTI, and the adjustment information is scrambled by using a second RNTI. The first RNTI is different from the second RNTI; or the first RNTI is the same as the second RNTI, both the adjustment information and the first activation information include a first field, and the first field in the adjustment information is set to a predetermined value.

With reference to the second aspect, in some implementations of the second aspect, the configuration information is CG configuration information, the transmission occasion is a CG transmission occasion, the first transmission occasion is a first CG transmission occasion, and the second transmission occasion is a second CG transmission occasion. Optionally, the performing data transmission with the terminal on one or more first transmission occasions includes: performing data transmission with the terminal on the one or more first CG transmission occasions based on the CG configuration information.

With reference to the second aspect, in some implementations of the second aspect, the CG configuration information may include third MCS information, and the adjustment information may include fourth MCS information. The third MCS information is used to configure an MCS on each of the one or more first CG transmission occasions, and the fourth MCS information indicates an MCS on each of the one or more second CG transmission occasions. Optionally, the MCS indicated by the fourth MCS information is lower than the MCS configured by using the third MCS information. For example, a modulation order indicated by the fourth MCS information is lower than a modulation order configured by using the third MCS information. For another example, a code rate indicated by the fourth MCS information is lower than a code rate configured by using the third MCS information. For another example, a modulation order indicated by the fourth MCS information is lower than a modulation order configured by using the third MCS information, and a code rate indicated by the fourth MCS information is lower than a code rate configured by using the third MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the fourth MCS information included in the adjustment information sent by the network device to the terminal is lower than the MCS configured by using the third MCS information in the CG configuration information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame. When the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the adjustment information is used to indicate the terminal that a lower MCS is used on the second CG transmission occasion. In this way, reliability of data transmission on the second CG transmission occasion is improved, and a retransmission probability of the data transmitted on the second CG transmission occasion is reduced. Therefore, a data transmission delay is reduced as much as possible, and user experience in receiving XR data is improved.

With reference to the second aspect, in some implementations of the second aspect, in addition to the third MCS information, the CG configuration information further includes third FDRA information. In addition to the fourth MCS information, the adjustment information further includes fourth FDRA information. The third FDRA information is used to configure a frequency domain resource on each of the one or more first CG transmission occasions, and the fourth FDRA information indicates a frequency domain resource on each of the one or more second CG transmission occasions. Optionally, frequency domain resources indicated by the fourth FDRA information are more than frequency domain resources configured by using the third FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the fourth MCS information included in the adjustment information sent by the network device to the terminal is lower than the MCS configured by using the third MCS information in the CG configuration information, and the frequency domain resources indicated by the fourth FDRA information included in the adjustment information are more than the frequency domain resources configured by using the third FDRA information in the CG configuration information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame. When resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, more resources are allocated to the second CG transmission occasion. In this way, the reliability of data transmission on the second CG transmission occasion is improved, and the retransmission probability of the data transmitted on the second CG transmission occasion is reduced. Therefore, the data transmission delay is reduced as much as possible, and user experience in receiving XR data is improved.

With reference to the second aspect, in some implementations of the second aspect, in addition to the CG configuration information including the third MCS information and the adjustment information including the fourth MCS information being sent to the terminal, second scheduling information is further sent to the terminal, where the second scheduling information is used to schedule data transmission on a time domain resource other than the plurality of CG transmission occasions. Data transmission is performed with the terminal on the time domain resource other than the plurality of CG transmission occasions. In this implementation, the data transmitted on the first CG transmission occasion and the data transmitted on the second CG transmission occasion may belong to the same picture frame. When the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, a resource other than the CG transmission occasion is additionally scheduled for transmitting data of the picture frame. Therefore, the data transmission delay is reduced as much as possible, and user experience in receiving XR data is improved.

With reference to the second aspect, in some implementations of the second aspect, the method further includes: sending second activation information to the terminal. The performing data transmission with the terminal on one or more first transmission occasions includes: performing data transmission with the terminal on the one or more first CG transmission occasions based on the second activation information. Optionally, the second activation information includes fifth MCS information, and the adjustment information includes sixth MCS information. The fifth MCS information indicates an MCS on each of the one or more first CG transmission occasions, and the sixth MCS information indicates an MCS on each of the one or more second CG transmission occasions. Optionally, the MCS indicated by the sixth MCS information is lower than the MCS indicated by using the fifth MCS information. For example, a modulation order indicated by the sixth MCS information is lower than a modulation order indicated by the fifth MCS information. For another example, a code rate indicated by the sixth MCS information is lower than a code rate indicated by the fifth MCS information. For another example, a modulation order indicated by the sixth MCS information is lower than a modulation order indicated by the fifth MCS information, and a code rate indicated by the sixth MCS information is lower than a code rate indicated by the fifth MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the sixth MCS information included in the adjustment information sent by the network device to the terminal is lower than the MCS indicated by the fifth MCS information in the second activation information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame. When the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the adjustment information is used to indicate the terminal that a lower MCS is used on the second CG transmission occasion. In this way, reliability of data transmission on the second CG transmission occasion is improved, and a retransmission probability of the data transmitted on the second CG transmission occasion is reduced. Therefore, a data transmission delay is reduced as much as possible, and user experience in receiving XR data is improved.

With reference to the second aspect, in some implementations of the second aspect, in addition to the fifth MCS information, the second activation information further includes fifth FDRA information. In addition to the sixth MCS information, the adjustment information further includes sixth FDRA information. The fifth FDRA information indicates a frequency domain resource on each of the one or more first CG transmission occasions, and the sixth FDRA information indicates a frequency domain resource on each of the one or more second CG transmission occasions. Optionally, frequency domain resources indicated by the sixth FDRA information are more than frequency domain resources indicated by using the fifth FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the sixth MCS information included in the adjustment information sent by the network device to the terminal is lower than the MCS indicated by the fifth MCS information in the second activation information, and the frequency domain resources indicated by the sixth FDRA information included in the adjustment information are more than the frequency domain resources indicated by the fifth FDRA information in the second activation information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame. When resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, more resources are allocated to the second CG transmission occasion. In this way, the reliability of data transmission on the second CG transmission occasion is improved, and the retransmission probability of the data transmitted on the second CG transmission occasion is reduced. Therefore, the data transmission delay is reduced as much as possible, and user experience in receiving XR data is improved.

With reference to the second aspect, in some implementations of the second aspect, in addition to the second activation information including the fifth MCS information and the adjustment information including the sixth MCS information being sent to the terminal, third scheduling information is further sent to the terminal, where the third scheduling information is used to schedule data transmission on a time domain resource other than the plurality of CG transmission occasions. Data transmission is performed with the terminal on the time domain resource other than the plurality of CG transmission occasions. In this implementation, the data transmitted on the first CG transmission occasion and the data transmitted on the second CG transmission occasion may belong to the same picture frame. When the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, a resource other than the CG transmission occasion is additionally scheduled for transmitting data of the picture frame. Therefore, the data transmission delay is reduced as much as possible, and user experience in receiving XR data is improved.

With reference to the second aspect, in some implementations of the second aspect, the second activation information is scrambled by using a third RNTI, and the adjustment information is scrambled by using a fourth RNTI. The third RNTI is different from the fourth RNTI; or the third RNTI is the same as the fourth RNTI, both the adjustment information and the second activation information include a second field, and the second field in the adjustment information is set to a predetermined value.

According to a third aspect, an embodiment of this application provides an apparatus, which may implement the method according to any one of the first aspect or the possible implementations of the first aspect. The apparatus includes a corresponding unit or module configured to perform the method. The unit or module included in the apparatus can be implemented by software and/or hardware. For example, the apparatus may be a terminal, may be a chip, a chip system, a processor, or the like that supports a terminal in implementing the method, or may be a logical module or software that can implement all or some functions of a terminal.

According to a fourth aspect, an embodiment of this application provides an apparatus, which may implement the method according to any one of the second aspect or the possible implementations of the second aspect. The apparatus includes a corresponding unit or module configured to perform the method. The unit or module included in the apparatus can be implemented by software and/or hardware. For example, the apparatus may be a network device, may be a chip, a chip system, a processor, or the like that supports a network device in implementing the method, or may be a logical module or software that can implement all or some functions of a network device.

According to a fifth aspect, an embodiment of this application provides an apparatus, including a processor. The processor is coupled to a memory. The memory is configured to store instructions. When the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that for beneficial effects of features corresponding to the first aspect in the second aspect to the thirteenth aspect, refer to related descriptions in the first aspect. Details are not described again.

### BRIEF DESCRIPTION OF DRAWINGS

FIG. 1 is a diagram of a communication system to which embodiments provided in this application are applied;
FIG. 2 to FIG. 5 are diagrams of several system frameworks to which embodiments of this application are applicable;
FIG. 6 is a diagram of periodic data;
FIG. 7 is a diagram of impact of internet protocol (Internet protocol, IP) packet transmission on a picture frame;
FIG. 8 is a diagram in which there is no retransmission opportunity due to a delay constraint in a semi-persistent scheduling (semi-persistent scheduling, SPS) mechanism;
FIG. 9 is a diagram in which there is no retransmission opportunity due to a delay constraint in a configured grant (configured grant, CG) mechanism;
FIG. 10 is a diagram of a data transmission method according to an embodiment of this application;
FIG. 11A and FIG. 11B are two example diagrams of adjusting data transmission on some of preconfigured transmission occasions;
FIG. 12 is a diagram of a data transmission method in an SPS mechanism according to an embodiment of this application;
FIG. 13, FIG. 14A, and FIG. 14B are three example diagrams of adjusting data transmission on some of preconfigured SPS transmission occasions;
FIG. 15 is a diagram of a data transmission method in a CG mechanism according to an embodiment of this application;
FIG. 16, FIG. 17A, and FIG. 17B are three example diagrams of adjusting data transmission on some of preconfigured CG transmission occasions;
FIG. 18 is a diagram of a structure of a terminal according to an embodiment of this application;
FIG. 19 is a diagram of a structure of an apparatus according to an embodiment of this application; and
FIG. 20 is a diagram of another apparatus according to an embodiment of this application.

### DESCRIPTION OF EMBODIMENTS

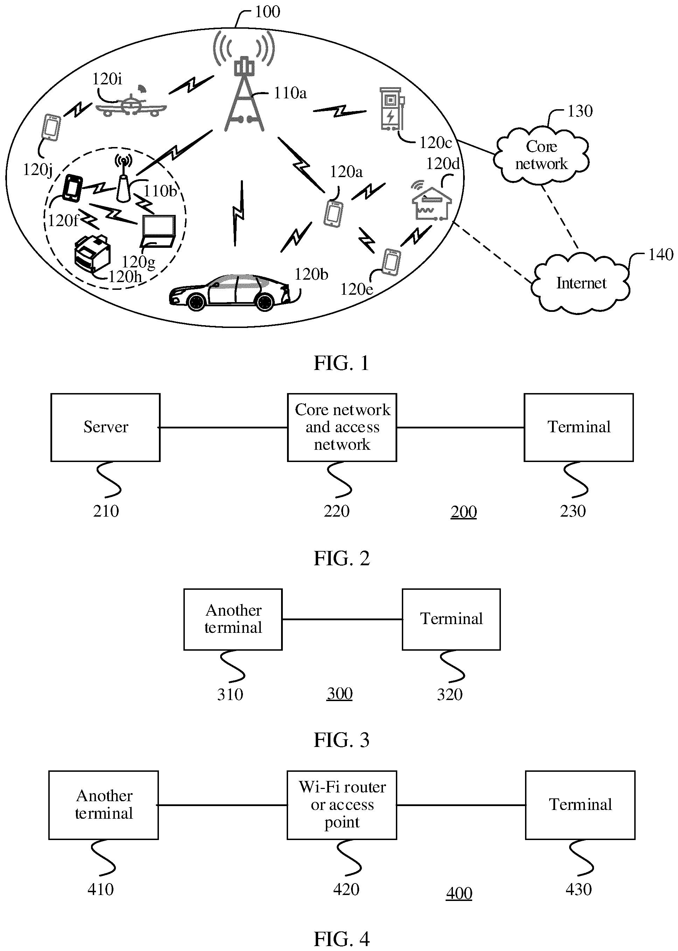

FIG. 1 is a diagram of an architecture of a communication system to which an embodiment of this application is applied. As shown in FIG. 1, the communication system includes a radio access network 100 and a core network 130. Optionally, the communication system 1000 may further include an internet 140. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different devices, functions of a core network device and logical functions of the radio access network device are integrated into a same device, or some functions of a core network device and some functions of the radio access network device are integrated into one device. Terminals may be connected to each other in a wired or wireless manner, and radio access network devices may be connected to each other in a wired or wireless manner. FIG. 1 is merely a diagram. The communication system may further include another network device, for example, may further include a relay device and a backhaul device, which are not shown in FIG. 1.

A method and an apparatus that are provided in embodiments of this application may be applied to various communication systems, for example, a 4th generation (4th generation, 4G) communication system, a 4.5G communication system, a 5G communication system, a 5.5G communication system, a 6G communication system, a system integrating a plurality of communication systems, or a future evolved communication system. The various communication systems are, for example, a long term evolution (long term evolution, LTE) system, a new radio (new radio, NR) system, a wireless fidelity (wireless fidelity, Wi-Fi) system, a 3rd generation partnership project (3rd generation partnership project, 3GPP)-related communication system, and another communication system of this type.

The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like, or may be a module or a unit that completes some functions of a base station, for example, may be a central unit (central unit, CU) or a distributed unit (distributed unit, DU). The radio access network device may be a macro base station (for example, 110a in FIG. 1), may be a micro base station or an indoor base station (for example, 110b in FIG. 1), or may be a relay node, a donor node, or the like. It may be understood that all or some functions of the radio access network device in this application may also be implemented by using a software function running on hardware, or may be implemented by using an instantiated virtualization function on a platform (for example, a cloud platform). A specific technology and a specific device form that are used by the radio access network device are not limited in embodiments of this application. For ease of description, the following provides descriptions by using an example in which the base station is used as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), internet of things (internet of things, IoT), virtual reality, augmented reality, industrial control, self-driving, telemedicine, a smart grid, smart home, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head-mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in the wireless or wired manner, for example, access the network via the Wi-Fi system, the 5G system, or another system.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, 110a and 120i may alternatively communicate with each other based on an interface protocol between base stations. In this case, for 110a, 120i is also a base station. Therefore, the base station and the terminal may be collectively referred to as communication apparatuses, 110a and 110b in FIG. 1 each may be referred to as a communication apparatus having a base station function, and 120a to 120j in FIG. 1 each may be referred to as a communication apparatus having a terminal function.

Communication between the base station and the terminal, between the base station and the base station, or between the terminal and the terminal may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in an application scenario of the terminal, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to the terminal, where the sidelink information is carried on a sidelink channel. The information may be control information, or may be data information.

An XR technology has advantages such as multiple views and strong interaction, can provide brand-new experience for the user, and has great application value and business potential. XR includes technologies such as VR, AR, and MR, and can be widely applied to many fields such as entertainment, gaming, medical care, advertising, industry, online education, and engineering. The VR technology is mainly to render visual and audio scenarios to simulate sensory stimulation of vision and audio in a real world to the user as much as possible. The VR technology usually requires the user to wear the XR terminal (for example, the head-mounted device) to simulate vision and/or hearing of the user. The VR technology may further perform action tracking on the user, to update simulated visual and/or auditory content in time. The AR technology is mainly to provide additional visual and/or auditory information or manually generated content in a real environment perceived by the user. The user may directly (where for example, sensing, processing, and rendering is not performed) or indirectly (where for example, transfer is performed via a sensor or the like) perceive the real environment, and further enhancement processing is performed. The MR technology is to insert some virtual elements into a physical scenario, to provide immersive experience for the user by adding these elements as a part of a real scenario.

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be briefly referred to as a transport network 220, for example, an LTE network, a 5G network, or a 6G network), and a terminal 230. The server 210 may be configured to: encode, decode, and render XR source data. The transport network 220 may be configured to transmit XR data. The terminal 230 provides diversified XR experience for a user by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 via the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are vehicle-mounted terminals, and the XR data may be exchanged between the vehicle-mounted terminals. It may be understood that the another terminal 310 may be further connected to a transport network (for example, an LTE network, a 5G network, or a 6G network), to obtain XR data from the transport network, or send data to the transport network.

FIG. 4 is a diagram of another scenario to which an embodiment of this application is applicable. FIG. 4 shows a system 400, including a terminal 430, a Wi-Fi router or Wi-Fi access point 420 (which may be briefly referred to as a Wi-Fi apparatus 420), and another terminal 410. The another terminal 410 is a terminal other than the terminal 430. The another terminal 410 may transmit XR data to the terminal 430 via the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device via the Wi-Fi router, the Wi-Fi access point, or the set-top box, and present the XR data to a user.

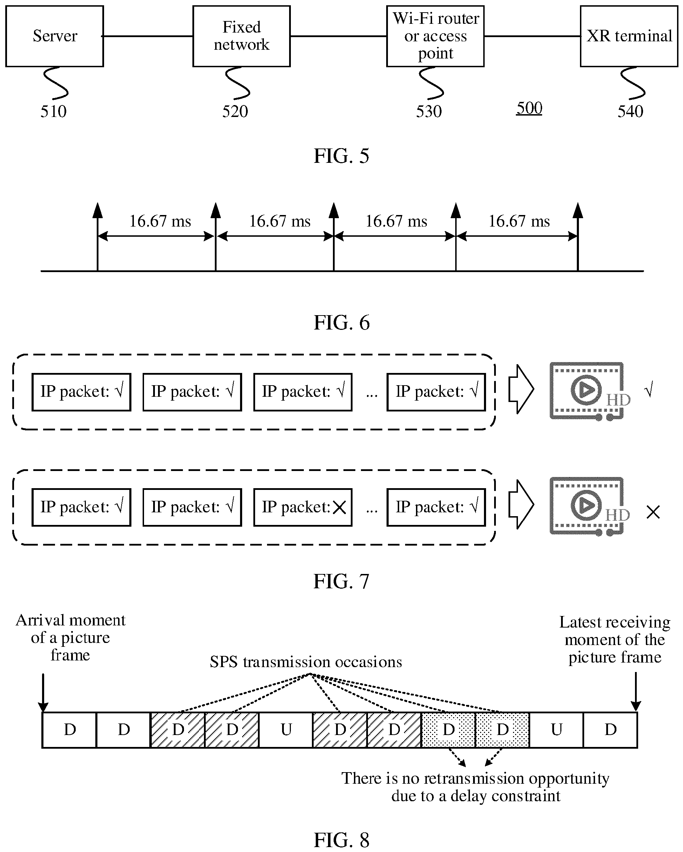

FIG. 5 is a diagram of another scenario to which an embodiment of this application is applicable. FIG. 5 shows a system 500, including a server 510, a fixed network 520, a Wi-Fi router or Wi-Fi access point 530 (which may be briefly referred to as a Wi-Fi apparatus 530), and a terminal 540. The server 510 may be configured to: encode, decode, and render XR source data, and transmit XR data to the terminal 540 via the fixed network 520 and the Wi-Fi apparatus 530. For example, the fixed network 520 is an operator network, the Wi-Fi apparatus 530 is the Wi-Fi router, the Wi-Fi access point, or a set-top box, and the server 510 transmits or projects the XR data to the terminal 540 via the operator network 520 and the Wi-Fi apparatus 530.

It may be understood that FIG. 2 to FIG. 5 are merely examples of several scenarios to which embodiments of this application are applicable, and do not limit a scenario to which embodiments of this application are applicable.

The following describes technical solutions of this application with reference to the accompanying drawings.

In addition, for ease of understanding the technical solutions of this application, a feature of an XR service or a video service, a configured grant (configured grant, CG) mechanism, and a semi-persistent scheduling (semi-persistent scheduling, SPS) mechanism are first briefly described.

XR data or video service data usually has a specific frame rate and a specific periodicity. For example, FIG. 6 is a diagram of distribution of picture frames of the XR service in terms of time when a frame rate is 60 frames per second (frames per second, FPS). It can be learned from FIG. 6 that in the case of 60 FPS, one picture frame appears or arrives at a spacing of 1,000/60≈16.67 ms.

Other possible frame rates include 30 FPS, 90 FPS, and 120 FPS. A radio access network device may obtain the frame rate of the XR data or the video service data in a plurality of different manners.

For example, the radio access network device may obtain the frame rate of the XR data or the video service data based on configuration information of a quality of service (quality of service, QoS) flow corresponding to the data, for example, a QoS profile (QoS profile). For another example, the radio access network device may obtain the frame rate of the XR data or the video service data by detecting an arrival time interval of a data packet in a QoS flow. For another example, a terminal may report a frame rate of uplink data or information related to the frame rate to the radio access network device by using assistance information, for example, an information element UEAssistanceInformation.

The terminal may also obtain the frame rate of the XR data or the video service data in a plurality of different manners.

For example, the terminal may obtain the frame rate of the XR data or the video service data based on configuration information of a QoS flow corresponding to the data, for example, a QoS rule (QoS rule). For another example, the terminal may obtain the frame rate of the XR data or the video service data by detecting an arrival time interval of a data packet in a QoS flow. For another example, the terminal may notify, through interaction between protocol layers, a protocol layer (for example, an RRC layer) below an application layer of the terminal of a frame rate of application layer data or information related to the frame rate.

The CG mechanism is a data transmission mechanism suitable for periodic uplink service transmission. The CG mechanism may be used to allocate, to the terminal in an uplink data transmission process by using an RRC message or downlink control information (downlink control information, DCI), a resource (which may also be referred to as a CG resource) for uplink data transmission, so that the terminal can periodically and repeatedly use the allocated resource to perform uplink data transmission. The CG resource may also be referred to as a CG transmission occasion in time domain. The CG mechanism may also be sometimes referred to as a configured scheduling (configured scheduling, CS) mechanism or a grant free (grant free, GF) mechanism.

The CG mechanism includes two types: a CG type 1 and a CG type 2. The following separately describes working procedures of the two CG types.

### The CG type 1

In the CG type 1, the radio access network device provides CG configuration information, such as CG cycle information and CG resource information, for the terminal by using the RRC message. The CG configuration information is further used to activate a CG configuration. After receiving the CG configuration information, the terminal may send the uplink data to the radio access network device based on the CG cycle information and the CG resource information.

In the CG type 1, the radio access network device sends the DCI to the terminal, to indicate the terminal to deactivate the CG configuration. After receiving the DCI, the terminal may release the CG resource, which may also be understood as stopping/suspending uplink data sending on the CG resource.

### The CG type 2

In the CG type 2, the radio access network device provides CG configuration information, such as CG cycle information, for the terminal by using the RRC message. The radio access network device further indicates CG resource information to the terminal by using the DCI. After receiving the DCI, the terminal may send the uplink data to the radio access network device based on the CG cycle information and the CG resource information. The DCI may also be understood as being used to indicate and activate the CG resource.

In the CG type 2, the radio access network device may further send another piece of DCI to the terminal, to indicate the terminal to deactivate a CG configuration. After receiving the DCI, the terminal may release the CG resource, which may also be understood as stopping/suspending uplink data sending on the CG resource.

The SPS mechanism is a data transmission mechanism suitable for periodic downlink service transmission. The SPS mechanism may be used to allocate, to the terminal in a downlink data transmission process by using an RRC message or DCI, a resource (which may also be referred to as an SPS resource) for downlink data transmission, so that the terminal can periodically and repeatedly use the allocated resource to receive downlink data. The SPS resource may also be referred to as an SPS transmission occasion in time domain.

In the SPS mechanism, the radio access network device provides SPS configuration information, such as SPS cycle information and/or SPS resource information, for the terminal by using the RRC message. The radio access network device further indicates, by using the DCI, the terminal to activate an SPS configuration. After receiving the DCI, the terminal may receive the downlink data from the radio access network device based on the SPS cycle information and the SPS resource information.

In the SPS mechanism, the radio access network device may further send another piece of DCI to the terminal, to indicate the terminal to deactivate the SPS configuration. After receiving the DCI, the terminal may release the SPS resource, which may also be understood as stopping/suspending downlink data reception on the SPS resource.

As described above, the XR data or the video service data usually has a specific frame rate and a specific periodicity. Therefore, the CG mechanism and the SPS mechanism are also suitable for transmitting the XR data or the video service data that has the periodicity.

The XR data is usually transmitted in a form of a picture frame, and a same picture frame may be usually processed into a plurality of data packets. For example, the same picture frame may be divided into a plurality of Internet protocol (Internet protocol, IP) packets, which are transmitted by the terminal to a base station side of a radio access network (radio access network, RAN), and then transmitted to a server for rendering through a core network. Because data compression is usually performed on a picture frame through source coding, a plurality of IP packets of one picture frame usually have a specific dependency relationship. As shown in FIG. 7, in a transmission process, if an error occurs in transmission of one IP packet, the entire picture frame cannot be recovered. The picture frame can be correctly recovered at a receive end only when all IP packets corresponding to the picture frame are successfully transmitted.

It can be learned that in an XR data transmission process, when some data of a picture frame is transmitted incorrectly or exceeds a delay budget during transmission, the picture frame cannot be correctly received even if other data of the picture frame is correctly transmitted. Therefore, how to efficiently use limited radio resources to improve XR data transmission efficiency is an urgent problem to be resolved.

The terminal usually has a specific terminal capability, and the terminal usually needs specific processing time to decode and restore downlink data and control information based on the terminal capability. For example, for receiving the downlink data (for example, downlink data carried on a physical downlink shared channel (physical downlink shared channel, PDSCH)), the terminal usually needs specific processing time. For example, the processing time for receiving the downlink data by the terminal is two slots. For another example, for receiving the control information (for example, control information carried on a physical downlink control channel (physical downlink control channel, PDCCH)), the terminal usually also needs specific processing time. For example, the processing time for receiving the control information by the terminal is two slots.

FIG. 8 is used as an example, which shows impact of a delay constraint on picture frame transmission in the SPS mechanism. FIG. 8 shows 11 slots between an arrival moment of a downlink picture frame and a latest receiving moment of the picture frame. Because the XR data has a strict transmission delay requirement, all data of the downlink picture frame needs to be correctly received by a receive side (for example, the terminal) in the 11 slots (that is, before the latest receiving moment of the picture frame shown in the figure), to meet experience of a user on the receive side. If the receive side correctly receives all the data of the downlink picture frame only after the latest receiving moment of the picture frame shown in the figure, receiving experience of the user deteriorates due to impact of a delay. In the figure, "D" represents a downlink slot used to transmit a downlink signal or downlink information, and "U" represents an uplink slot used to transmit an uplink signal or uplink information. Slot distribution shown in FIG. 8 may be understood as a slot configuration made by the radio access network device for the terminal. A 3^{rd} to 8^{th} downlink slots are SPS transmission occasions.

Retransmission time corresponding to the SPS transmission occasion may be related to a slot configuration of the terminal and the terminal capability.

For example, if the terminal attempts to receive the downlink data from the network device on a 1^{st} SPS transmission occasion in FIG. 8, and determines a receive error after processing time of two slots, the terminal needs to feed back a negative acknowledgment (negative acknowledgment, NACK) for the receive error to the network device, so that the network device can retransmit incorrectly received data to the terminal. Because only a 2^{nd} "U" slot in FIG. 8 can meet a requirement that the terminal feeds back the NACK after the processing time of two slots, the network device may retransmit the incorrectly received data to the terminal in a "D" slot before the latest receiving moment of the picture frame. In FIG. 8, retransmission time corresponding to an SPS transmission occasion shown by diagonal lines is a "D" slot before the latest receiving moment of the picture frame.

For another example, if the terminal attempts to receive the downlink data from the network device on an SPS transmission occasion (a 5^{th} or 6^{th} SPS transmission occasion) shown by dot lines in FIG. 8, and determines a receive error after processing time of two slots, the terminal has no opportunity to feed back a NACK for the receive error to the network device before the latest receiving moment of the picture frame. This is because the slot configuration and the terminal capability make retransmission time corresponding to the SPS transmission occasion shown by dot lines beyond the latest receiving moment of the picture frame; and as a result, there is no retransmission opportunity for some incorrectly received data of the picture frame, and the picture frame cannot be correctly recovered on the receive side.

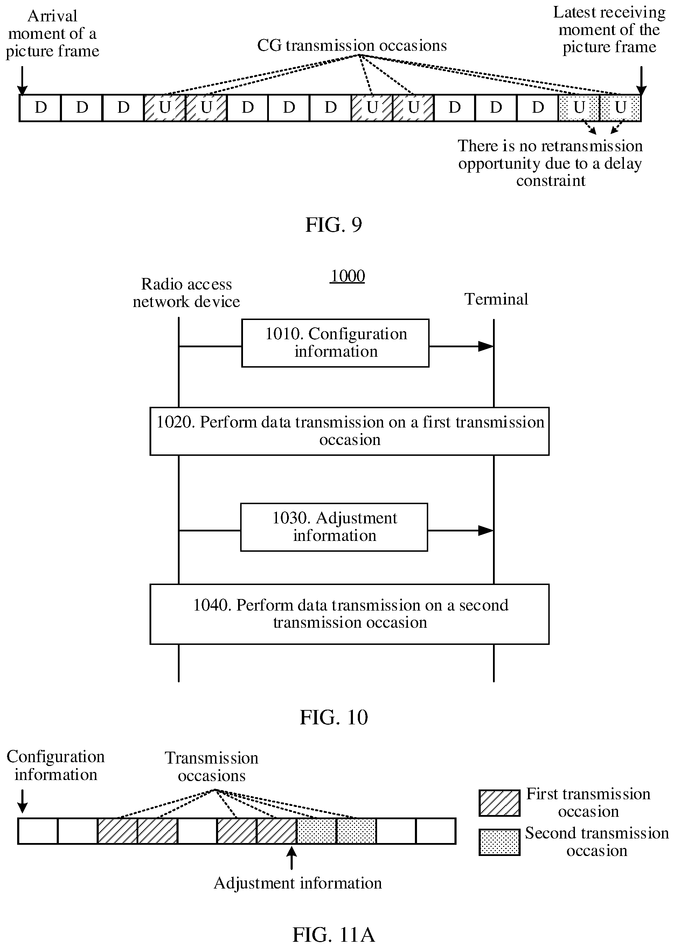

FIG. 9 is further used as an example, which shows impact of a delay constraint on picture frame transmission in the CG mechanism. In the foregoing example, a terminal capability that the processing time for receiving the control information by the terminal is two slots is used as an example. Similar to FIG. 8, retransmission time corresponding to a CG transmission occasion may also be related to the slot configuration of the terminal and the terminal capability. In FIG. 9, uplink data that is of a picture frame and that is incorrectly transmitted on two CG transmission occasions shown by dot lines before a latest receiving moment of the picture frame has no retransmission opportunity due to a delay constraint. This is because the slot configuration and the terminal capability shown in FIG. 9 make retransmission time corresponding to the CG transmission occasion shown by dot lines beyond the latest receiving moment of the picture frame, and as a result, the picture frame cannot be correctly recovered on the receive side.

This application provides a data transmission method. Data transmission on some preconfigured transmission occasions may be adjusted in time, so that the preconfigured transmission occasion can better adapt to a requirement of XR data on a transmission delay and the like, and a preconfigured radio resource can be more efficiently used to improve XR data transmission efficiency, improving user experience. It may be understood that the method provided in this application does not limit a data service type to which the method is applied, and is also applicable to a data service type other than XR data and/or video service data.

FIG. 10 is a diagram of interaction in a data transmission method 1000 according to an embodiment of this application. In FIG. 10, the method is illustrated by using an example in which a radio access network device and a terminal perform interaction. However, an execution body of the interaction is not limited in this application. For example, the radio access network device in FIG. 10 may alternatively be a chip, a chip system, or a processor that supports the radio access network device in implementing the method, or may be a logical module or software that can implement all or some functions of the radio access network device. The terminal in FIG. 10 may alternatively be a chip, a chip system, or a processor that supports the terminal in implementing the method, or may be a logical module or software that can implement all or some functions of the terminal. As shown in FIG. 10, the method 1000 in this embodiment may include part 1010, part 1020, part 1030, and part 1040.

Part 1010: The radio access network device sends configuration information to the terminal, and correspondingly, the terminal receives the configuration information, where the configuration information is used to configure a plurality of transmission occasions.

Part 1020: The terminal and the radio access network device perform data transmission on one or more first transmission occasions, where the one or more first transmission occasions are some of the plurality of transmission occasions.

Part 1030: The radio access network device sends adjustment information to the terminal, and correspondingly, the terminal receives the adjustment information, where the adjustment information indicates data transmission on one or more second transmission occasions, the one or more second transmission occasions are some of the plurality of transmission occasions, and the one or more second transmission occasions are different from the one or more first transmission occasions. The adjustment information may be included in DCI, and is carried by a PDCCH.

Part 1040: The radio access network device performs data transmission with the terminal on the one or more second transmission occasions. Correspondingly, the terminal performs data transmission with the radio access network device on the one or more second transmission occasions based on the adjustment information.

It may be understood that in the method 1000, part 1020 is performed after part 1010, and part 1040 is performed after part 1030, but an execution sequence of the other parts is not limited.

As shown in FIG. 11A, the radio access network device preconfigures the plurality of transmission occasions for the terminal by using the configuration information, and adjusts data transmission on some of the transmission occasions by using the adjustment information. In the preconfigured transmission occasions, a transmission occasion adjusted by using the adjustment information is referred to as a second transmission occasion, and a transmission occasion not adjusted by using the adjustment information is referred to as a first transmission occasion. The terminal performs data transmission with the radio access network device on the second transmission occasion based on the adjustment information. However, data transmission on the first transmission occasion is not adjusted by using the adjustment information. In FIG. 11A, only an example in which the adjustment information is received on a transmission occasion previous to the second transmission occasion is used, but this does not limit time at which the adjustment information is received. In FIG. 11A, the time at which the adjustment information is received is not later than the second transmission occasion.

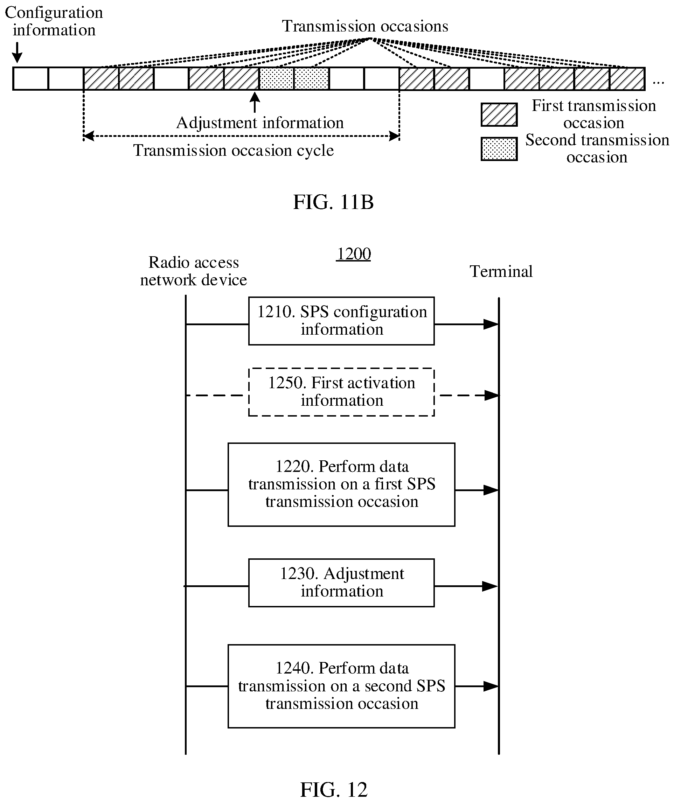

As shown in FIG. 11B, the radio access network device preconfigures the plurality of transmission occasions for the terminal by using the configuration information, and these transmission occasions occur periodically. The adjustment information may be used to adjust data transmission on a second transmission occasion in one cycle, without affecting data transmission in a subsequent cycle. For example, in FIG. 11B, the terminal receives the adjustment information in a 1^{st} cycle in the figure. Therefore, the adjustment information is used to adjust last two transmission occasions in the cycle, and the last two transmission occasions in the cycle are second transmission occasions. However, another transmission occasion in the cycle and a transmission occasion in the subsequent cycle are still first transmission occasions. Therefore, an adjustment indicated by the adjustment information may also be understood as a temporary adjustment. "Temporary" means that the adjustment information is used to adjust a transmission occasion in a cycle in which the adjustment information is received, and is not used to adjust a transmission occasion outside the cycle in which the adjustment information is received.

In the method 1000, the configuration information may be used to preconfigure the plurality of transmission occasions for periodic data transmission. The adjustment information may be used to adjust data transmission on some of the plurality of preconfigured transmission occasions in time based on an actual data transmission requirement, so that the preconfigured transmission occasion can better adapt to a requirement of data (for example, XR data) on a transmission delay and the like, and a preconfigured radio resource can be more efficiently used to improve data transmission efficiency, improving user experience.

FIG. 12 is a diagram of interaction in a specific implementation method 1200 of the method 1000. The method 1200 may be understood as a specific implementation of the method 1000 in an SPS mechanism. The method 1200 includes part 1210, part 1220, part 1230, and part 1240, which respectively correspond to part 1010, part 1020, part 1030, and part 1040 in the method 1000.

Part 1210: The radio access network device sends SPS configuration information to the terminal, and correspondingly, the terminal receives the SPS configuration information, where the SPS configuration information is used to configure a plurality of SPS transmission occasions. In other words, the configuration information in the method 1000 is the SPS configuration information, and the transmission occasion is an SPS transmission occasion. The SPS configuration information may be carried in an RRC message. The terminal can learn a time domain position of the SPS transmission occasion based on the SPS configuration information.

Part 1220: The terminal performs data transmission with the radio access network device on one or more first SPS transmission occasions, where the one or more first SPS transmission occasions are some of the plurality of SPS transmission occasions. In other words, the first transmission occasion in the method 1000 is a first SPS transmission occasion. Specifically, in the SPS mechanism, the radio access network device sends downlink data to the terminal on the one or more first SPS transmission occasions, and correspondingly, the terminal receives the downlink data from the radio access network device on the one or more first SPS transmission occasions.

Optionally, the method 1200 further includes part 1250: The radio access network device sends first activation information to the terminal, where the first activation information is used to activate data transmission on the one or more first SPS transmission occasions. Correspondingly, the terminal receives the first activation information from the radio access network device. In part 1220, the terminal performs data transmission with the radio access network device on the one or more first SPS transmission occasions based on the first activation information. The first activation information may be understood as being used to activate the SPS transmission occasion preconfigured by using the SPS configuration information. The first activation information may be included in the DCI, and is carried by the PDCCH.

It may be understood that when there is no adjustment information in part 1230, one or more SPS transmission occasions configured by using the SPS configuration information are all first SPS transmission occasions. In other words, when not receiving the adjustment information in part 1230, the terminal performs, based on the first activation information, data transmission with the radio access network device on the one or more first SPS transmission occasions preconfigured by using the configuration information.

Optionally, the first activation information is scrambled by using a first radio network temporary identifier (radio network temporary identifier, RNTI), and the adjustment information is scrambled by using a second RNTI.

In a possible design, the first RNTI is different from the second RNTI. In this case, the terminal may distinguish between the first activation information and the adjustment information based on the RNTI. Optionally, the first RNTI is a configured scheduling RNTI (configured scheduling RNTI, CS-RNTI), and the second RNTI is another RNTI different from the CS-RNTI. For example, the second RNTI may be referred to as a CS-RNTI-Type2, or may be another RNTI different from the CS-RNTI. This is not limited in this application.

In another possible design, the first RNTI is the same as the second RNTI, both the adjustment information and the first activation information include a first field, and the first field in the adjustment information is set to a predetermined value. In this case, the terminal may distinguish between the first activation information and the adjustment information based on the first field. In other words, when finding that the first field is set to the predetermined value, the terminal may recognize that the information is the adjustment information. Optionally, both the first RNTI and the second RNTI are CS-RNTIs. Optionally, the first field may be a redundancy version (redundancy version, RV) field in the DCI, and the predetermined value may be a reserved value other than 0.

Part 1230: The radio access network device sends the adjustment information to the terminal, and correspondingly, the terminal receives the adjustment information, where the adjustment information indicates data transmission on one or more second SPS transmission occasions, the one or more second SPS transmission occasions are some of the plurality of SPS transmission occasions, and the one or more second SPS transmission occasions are different from the one or more first SPS transmission occasions. In other words, the second transmission occasion in the method 1200 is a second SPS transmission occasion.

Part 1240: The radio access network device performs data transmission with the terminal on the one or more second SPS transmission occasions. Correspondingly, the terminal performs data transmission with the radio access network device on the one or more second SPS transmission occasions based on the adjustment information. Specifically, in the SPS mechanism, the radio access network device sends the downlink data to the terminal on the one or more second SPS transmission occasions, and correspondingly, the terminal receives the downlink data from the radio access network device on the one or more second SPS transmission occasions.

In the method 1200, the radio access network device may adjust data transmission of the terminal on some preconfigured SPS transmission occasions in time by using the adjustment information, so that the preconfigured SPS transmission occasion can better adapt to a requirement of data on the transmission delay and the like, and a preconfigured SPS resource can be more efficiently used to improve data transmission efficiency, improving user experience. In addition, in the method, data transmission on another preconfigured SPS transmission occasion is not affected, so that impact on other data transmission is also reduced as much as possible while user experience in receiving data is improved.

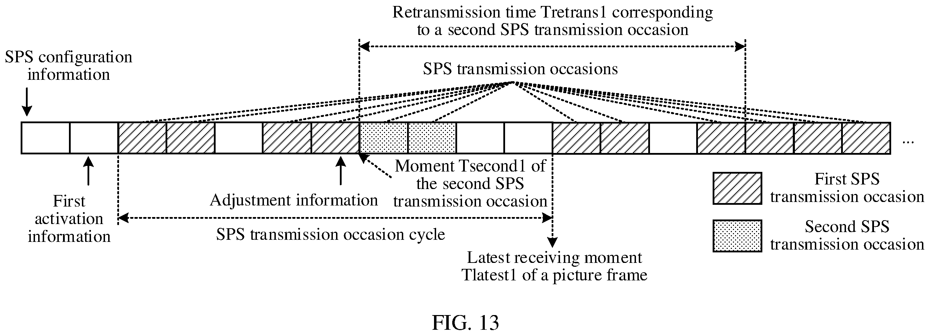

FIG. 13 is used as an example. After receiving the SPS configuration information from the radio access network device, the terminal may learn an SPS transmission occasion cycle and time domain distribution of SPS transmission occasions in the cycle, to learn a time domain position (shown in a shade in the figure) of the SPS transmission occasion. Then, the terminal receives the first activation information from the radio access network device, to activate data transmission on the preconfigured SPS transmission occasion. The terminal receives the adjustment information in the SPS transmission occasion cycle shown in FIG. 13, where the adjustment information is used to adjust data transmission on last two SPS transmission occasions in the cycle. Therefore, except that the last two SPS transmission occasions in the SPS transmission occasion cycle shown in FIG. 13 are second SPS transmission occasions, other SPS transmission occasions are first SPS transmission occasions. The terminal may receive the downlink data from the radio access network device on the first SPS transmission occasion based on the first activation information, and receive the downlink data from the radio access network device on the second SPS transmission occasion based on the adjustment information.

In a possible implementation of the method 1200, the first activation information includes first modulation and coding scheme (modulation and coding scheme, MCS) information, and the adjustment information includes second MCS information. The first MCS information indicates an MCS on each of the one or more first SPS transmission occasions, and the second MCS information indicates an MCS on each of the one or more second SPS transmission occasions. Optionally, the MCS indicated by the second MCS information is lower than the MCS indicated by the first MCS information. For example, a modulation order indicated by the second MCS information is lower than a modulation order indicated by the first MCS information. For another example, a code rate indicated by the second MCS information is lower than a code rate indicated by the first MCS information. For another example, a modulation order indicated by the second MCS information is lower than a modulation order indicated by the first MCS information, and a code rate indicated by the second MCS information is lower than a code rate indicated by the first MCS information. This implementation may be understood as follows: When a latest receiving moment Tlatest1 of a picture frame, a moment Tsecond1 of the second SPS transmission occasion, and retransmission time Tretrans1 corresponding to the second SPS transmission occasion satisfy Tlatest1-Tsecond1<Tretrans1, the MCS indicated by the second MCS information included in the adjustment information sent by the radio access network device to the terminal is lower than the MCS indicated by the first MCS information in the first activation information. Optionally, the retransmission time Tretrans1 corresponding to the second SPS transmission occasion is related to a slot configuration of the terminal and a terminal capability. For descriptions about that retransmission time corresponding to the SPS transmission occasion is related to the slot configuration of the terminal and the terminal capability, refer to the descriptions about FIG. 8. Details are not described herein again.

In this implementation, data transmitted on the first SPS transmission occasion and data transmitted on the second SPS transmission occasion may belong to a same picture frame. When the second SPS transmission occasion includes sufficient SPS resources, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the adjustment information is used to indicate the terminal that a lower MCS is used on the second SPS transmission occasion. In this way, reliability of data transmission on the second SPS transmission occasion is improved, and a retransmission probability of the data transmitted on the second SPS transmission occasion is reduced. Therefore, a data transmission delay is reduced as much as possible, and user experience in receiving data is improved.

In this application, retransmission time corresponding to a transmission occasion (for example, the retransmission time corresponding to the second SPS transmission occasion or retransmission time corresponding to a second CG transmission occasion) may be understood as a time interval or a shortest time interval at which data on the transmission occasion needs to wait for retransmission. In this application, a latest receiving moment of a picture frame may be understood as follows: A receive side (for example, the terminal) can successfully restore the picture frame if completing receiving data of the picture frame not later than the latest receiving moment, or cannot successfully restore the picture frame if completing receiving data of the picture frame data.

FIG. 13 is still used as an example. There are a total of six SPS transmission occasions in the SPS transmission occasion cycle shown in the figure. For example, 10,000 bits of data may be transmitted on each first SPS transmission occasion configured by using the SPS configuration information, and the transmitted picture frame has a total of 50,000 bits of data. FIG. 13 further shows the latest receiving moment Tlatest1 of the picture frame, the moment Tsecond1 of the second SPS transmission occasion, and the retransmission time Tretrans1 corresponding to the second SPS transmission occasion. The radio access network device transmits a total of 40,000 bits of data on the first four first SPS transmission occasions in the SPS transmission occasion cycle. The case shown in FIG. 8 is used as an example. For the last two SPS transmission occasions in the SPS transmission occasion cycle, impact of a delay constraint required by the picture frame causes Tlatest1-Tsecond1<Tretrans1. In addition, resources on the two SPS transmission occasions are sufficient to carry the remaining 10,000 bits of the picture frame. Therefore, the radio access network device may send the adjustment information to the terminal, to indicate, to the terminal, that MCSs are temporarily reduced for data transmission on the two second SPS transmission occasions. For example, 5,000 bits of data may be carried on each second SPS transmission occasion after the MCSs are reduced. Therefore, reliability of data transmission on the two second SPS transmission occasions can be improved, and a retransmission probability of data transmitted on the two second SPS transmission occasions can be reduced, to avoid, as far as possible, a receiving failure of the entire picture frame caused by the fact that retransmission needs to be performed but retransmission cannot be completed within specified time.

In another possible implementation of the method 1200, in addition to the first MCS information, the first activation information further includes first frequency domain resource allocation (frequency domain allocation assignment, FDRA) information. In addition to the second MCS information, the adjustment information further includes second FDRA information. The first FDRA information indicates a frequency domain resource on each of the one or more first SPS transmission occasions, and the second FDRA information indicates a frequency domain resource on each of the one or more second SPS transmission occasions. Optionally, the MCS indicated by the second MCS information is lower than the MCS indicated by the first MCS information, and frequency domain resources indicated by the second FDRA information are more than frequency domain resources indicated by the first FDRA information. This implementation may be understood as follows: When the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the MCS indicated by the second MCS information included in the adjustment information sent by the radio access network device to the terminal is lower than the MCS indicated by the first MCS information in the first activation information, and the frequency domain resources indicated by the second FDRA information included in the adjustment information are more than the frequency domain resources indicated by the first FDRA information in the first activation information. Optionally, the retransmission time Tretrans1 corresponding to the second SPS transmission occasion is related to the slot configuration of the terminal and the terminal capability. For descriptions about that the retransmission time corresponding to the SPS transmission occasion is related to the slot configuration of the terminal and the terminal capability, refer to the descriptions about FIG. 8. Details are not described herein again.

In this implementation, the data transmitted on the first SPS transmission occasion and the data transmitted on the second SPS transmission occasion may belong to the same picture frame. When resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, more resources are allocated to the second SPS transmission occasion. In this way, the reliability of data transmission on the second SPS transmission occasion is improved, and the retransmission probability of the data transmitted on the second SPS transmission occasion is reduced. Therefore, the data transmission delay is reduced as much as possible, and user experience in receiving data is improved.

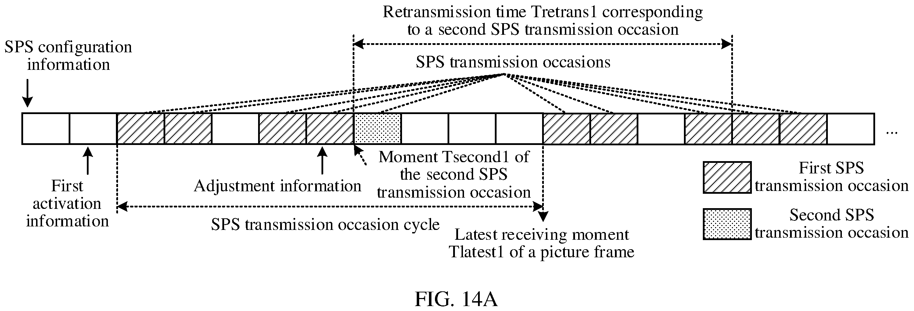

FIG. 14A is used as an example. There are a total of five SPS transmission occasions in an SPS transmission occasion cycle shown in the figure. For example, 10,000 bits of data may be transmitted on each first SPS transmission occasion configured by using the SPS configuration information, and the transmitted picture frame has a total of 50,000 bits of data. FIG. 14A further shows the latest receiving moment Tlatest1 of the picture frame, the moment Tsecond1 of the second SPS transmission occasion, and the retransmission time Tretrans1 corresponding to the second SPS transmission occasion. The radio access network device transmits a total of 40,000 bits of data on the first four first SPS transmission occasions in the SPS transmission occasion cycle. For the last SPS transmission occasion in the SPS transmission occasion cycle, a reason similar to that described in FIG. 8 is used as an example, and the impact of the delay constraint required by the picture frame causes Tlatest1-Tsecond1<Tretrans1. In this case, if an MCS on the second SPS transmission occasion is reduced by using the adjustment information, a quantity of bits that can be carried on the second SPS transmission occasion is reduced, and the remaining 10,000 bits cannot be carried. Therefore, in this case, in addition to the second MCS information used to reduce the MCS on the second SPS transmission occasion, the adjustment information further includes the second FDRA information used to temporarily add a frequency domain resource to the second SPS transmission occasion, to carry the remaining 10,000 bits when the MCS on the second SPS transmission occasion is reduced. In addition, because the MCS is reduced, reliability of data transmission on the second SPS transmission occasion can be improved, and a retransmission probability of data transmitted on the second SPS transmission occasion can be reduced, to avoid, as far as possible, the receiving failure of the entire picture frame caused by the fact that retransmission needs to be performed but retransmission cannot be completed within the specified time.

In another possible implementation of the method 1200, in addition to sending the first activation information including the first MCS information and the adjustment information including the second MCS information to the terminal, the method 1200 further includes: sending, by the radio access network device, first scheduling information to the terminal, where the first scheduling information is used to schedule data transmission on a time domain resource other than the plurality of SPS transmission occasions; and performing data transmission with the terminal on the time domain resource other than the plurality of SPS transmission occasions. Correspondingly, the terminal receives the first scheduling information, and performs, based on the first scheduling information, data transmission with the radio access network device on the time domain resource other than the plurality of SPS transmission occasions. Data transmission on the time domain resource other than the SPS transmission occasion may also be referred to as non-SPS data transmission.

In this implementation, the data transmitted on the first SPS transmission occasion and the data transmitted on the second SPS transmission occasion may belong to the same picture frame. When the resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, a resource other than the SPS transmission occasion is additionally scheduled for transmitting data of the picture frame. Therefore, the data transmission delay is reduced as much as possible, and user experience in receiving data is improved.

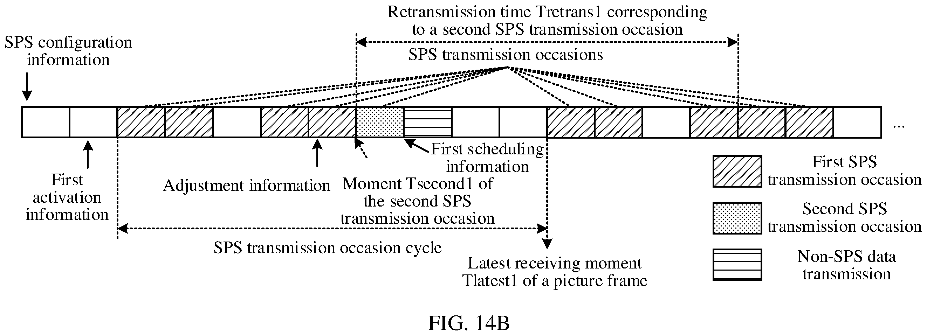

FIG. 14B is used as an example. There are a total of five SPS transmission occasions in an SPS transmission occasion cycle shown in the figure. For example, 10,000 bits of data may be transmitted on each first SPS transmission occasion configured by using the SPS configuration information, and the transmitted picture frame has a total of 50,000 bits of data. FIG. 14B further shows the latest receiving moment Tlatest1 of the picture frame, the moment Tsecond1 of the second SPS transmission occasion, and the retransmission time Tretrans1 corresponding to the second SPS transmission occasion. The radio access network device transmits a total of 40,000 bits of data on the first four first SPS transmission occasions in the SPS transmission occasion cycle. For the last SPS transmission occasion in the SPS transmission occasion cycle, a reason similar to that described in FIG. 8 is used as an example, and the impact of the delay constraint required by the picture frame causes Tlatest1-Tsecond1<Tretrans1. In this case, if an MCS on the second SPS transmission occasion is reduced by using the adjustment information, a quantity of bits that can be carried on the second SPS transmission occasion is reduced, for example, is reduced to 5,000 bits. Therefore, in this case, in addition to sending the adjustment information including the second MCS information to the terminal, the radio access network device further sends the first scheduling information to the terminal, to schedule a time domain resource (shown by horizontal stripes in the figure) other than the SPS transmission occasion, to carry all the remaining 5,000 bits on the additionally scheduled time domain resource. Because the MCS on the second SPS transmission occasion is reduced, reliability of data transmission on the second SPS transmission occasion can be improved, and a retransmission probability of data transmitted on the second SPS transmission occasion can be reduced, to avoid, as far as possible, the receiving failure of the entire picture frame caused by the fact that retransmission needs to be performed but retransmission cannot be completed within the specified time.

Optionally, the method 1200 further includes: The radio access network device sends SPS deactivation information to the terminal, where the SPS deactivation information is used to deactivate an SPS configuration. The terminal receives the SPS deactivation information, and stops/suspends, based on the SPS deactivation information, downlink data reception on the SPS transmission occasion. The SPS deactivation information may be included in the DCI, and is carried by the PDCCH.

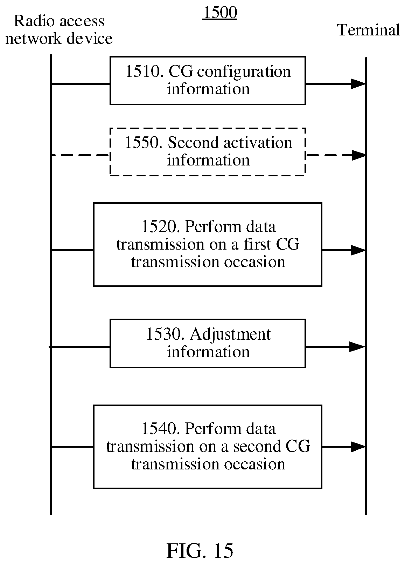

FIG. 15 is a diagram of interaction in another specific implementation method 1500 of the method 1000. The method 1500 may be understood as a specific implementation of the method 1000 in a CG mechanism. The method 1500 includes part 1510, part 1520, part 1530, and part 1540, which respectively correspond to part 1010, part 1020, part 1030, and part 1040 in the method 1000.

Part 1510: The radio access network device sends CG configuration information to the terminal, and correspondingly, the terminal receives the CG configuration information, where the CG configuration information is used to configure a plurality of CG transmission occasions. In other words, the configuration information in the method 1000 is the CG configuration information, and the transmission occasion is a CG transmission occasion. The CG configuration information may be carried in an RRC message. The terminal can learn a time domain position of the CG transmission occasion based on the CG configuration information.

Part 1520: The terminal performs data transmission with the radio access network device on one or more first CG transmission occasions, where the one or more first CG transmission occasions are some of the plurality of CG transmission occasions. In other words, the first transmission occasion in the method 1000 is a first CG transmission occasion. Specifically, in the CG mechanism, the terminal sends uplink data to the radio access network device on the one or more first CG transmission occasions, and correspondingly, the radio access network device receives the uplink data from the terminal on the one or more first CG transmission occasions.

It may be understood that when there is no adjustment information in part 1530, one or more CG transmission occasions configured by using the CG configuration information are all first CG transmission occasions. In other words, when not receiving the adjustment information in part 1530, the terminal performs, based on second activation information, data transmission with the radio access network device on the one or more CG transmission occasions preconfigured by using the configuration information.

As described above, the CG mechanism includes a CG type 1 and a CG type 2.

In the CG type 1, the CG configuration information in part 1510 is not only used to configure the plurality of CG transmission occasions, but also used to activate a CG configuration. In other words, the terminal performs data transmission with the radio access network device on the one or more first CG transmission occasions based on the CG configuration information.

In the CG type 2, the method 1500 optionally further includes part 1550: The radio access network device sends the second activation information to the terminal, where the second activation information is used to activate data transmission on the one or more first CG transmission occasions. Correspondingly, the terminal receives the second activation information from the radio access network device. In part 1520, the terminal performs data transmission with the radio access network device on the one or more first CG transmission occasions based on the second activation information. The second activation information may be understood as being used to activate the CG transmission occasion preconfigured by using the CG configuration information. The second activation information may be included in the DCI, and is carried by the PDCCH.

Optionally, the second activation information is scrambled by using a third RNTI, and the adjustment information is scrambled by using a fourth RNTI.

In a possible design, the third RNTI is different from the fourth RNTI. In this case, the terminal may distinguish between the second activation information and the adjustment information based on the RNTI. Optionally, the third RNTI is a CS-RNTI, and the fourth RNTI is another RNTI different from the CS-RNTI. For example, the fourth RNTI may be referred to as a CS-RNTI-Type2, or may be another RNTI different from the CS-RNTI. This is not limited in this application.

In another possible design, the third RNTI is the same as the fourth RNTI, both the adjustment information and the second activation information include a second field, and the second field in the adjustment information is set to a predetermined value. In this case, the terminal may distinguish between the second activation information and the adjustment information based on the second field. In other words, when finding that the second field is set to the predetermined value, the terminal may recognize that the information is the adjustment information. Optionally, both the third RNTI and the fourth RNTI are CS-RNTIs. Optionally, the second field may be an RV field in the DCI, and the predetermined value may be a reserved value other than 0.

Part 1530: The radio access network device sends the adjustment information to the terminal, and correspondingly, the terminal receives the adjustment information, where the adjustment information indicates data transmission on one or more second CG transmission occasions, the one or more second CG transmission occasions are some of the plurality of CG transmission occasions, and the one or more second CG transmission occasions are different from the one or more first CG transmission occasions. In other words, the second transmission occasion in the method 1500 is a second CG transmission occasion.

Part 1540: The radio access network device performs data transmission with the terminal on the one or more second CG transmission occasions. Correspondingly, the terminal performs data transmission with the radio access network device on the one or more second CG transmission occasions based on the adjustment information. Specifically, in the CG mechanism, the terminal sends the uplink data to the radio access network device on the one or more second CG transmission occasions, and correspondingly, the radio access network device receives the uplink data from the terminal on the one or more second CG transmission occasions.

In the method 1500, the radio access network device may adjust data transmission of the terminal on some preconfigured CG transmission occasions in time by using the adjustment information, so that the preconfigured CG transmission occasion can better adapt to a requirement of data on the transmission delay and the like, and a preconfigured CG resource can be more efficiently used to improve data transmission efficiency, improving user experience. In addition, in the method, data transmission on another preconfigured CG transmission occasion is not affected, so that impact on other data transmission is also reduced as much as possible while user experience in receiving data is improved.

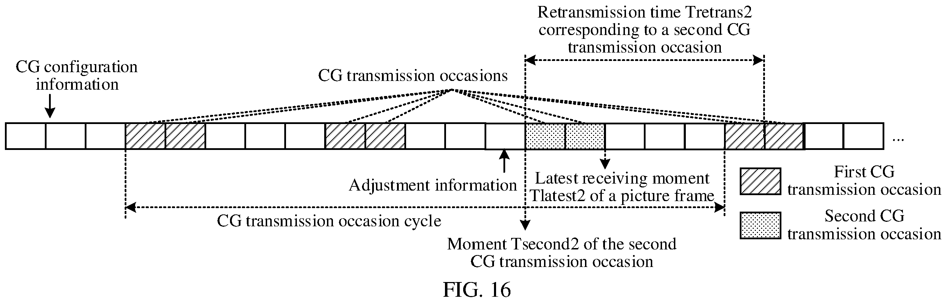

FIG. 16 is used as an example. After receiving the CG configuration information from the radio access network device, the terminal may learn a CG transmission occasion cycle and time domain distribution of CG transmission occasions in the cycle, to learn a time domain position (shown in a shade in the figure) of the CG transmission occasion. The terminal activates data transmission on the preconfigured CG transmission occasion based on the CG configuration information or the second activation information subsequently received by the terminal from the radio access network device. The terminal receives the adjustment information in the CG transmission occasion cycle shown in FIG. 16, where the adjustment information is used to adjust data transmission on last two CG transmission occasions in the cycle. Therefore, except that the last two CG transmission occasions in the CG transmission occasion cycle shown in FIG. 16 are second CG transmission occasions, other CG transmission occasions are first CG transmission occasions. The terminal sends the uplink data to the radio access network device on the first CG transmission occasion based on the CG configuration information or the second activation information, and sends the uplink data to the radio access network device on the second CG transmission occasion based on the adjustment information.

In a possible implementation of the CG type 1, the CG configuration information may include third MCS information, and the adjustment information may include fourth MCS information. The third MCS information is used to configure an MCS on each of the one or more first CG transmission occasions, and the fourth MCS information indicates an MCS on each of the one or more second CG transmission occasions. Optionally, the MCS indicated by the fourth MCS information is lower than the MCS configured by using the third MCS information. For example, a modulation order indicated by the fourth MCS information is lower than a modulation order configured by using the third MCS information. For another example, a code rate indicated by the fourth MCS information is lower than a code rate configured by using the third MCS information. For another example, a modulation order indicated by the fourth MCS information is lower than a modulation order configured by using the third MCS information, and a code rate indicated by the fourth MCS information is lower than a code rate configured by using the third MCS information.

In a possible implementation of the CG type 2, the second activation information includes fifth MCS information, and the adjustment information includes sixth MCS information. The fifth MCS information indicates an MCS on each of the one or more first CG transmission occasions, and the sixth MCS information indicates an MCS on each of the one or more second CG transmission occasions. Optionally, the MCS indicated by the sixth MCS information is lower than the MCS indicated by using the fifth MCS information. For example, a modulation order indicated by the sixth MCS information is lower than a modulation order indicated by the fifth MCS information. For another example, a code rate indicated by the sixth MCS information is lower than a code rate indicated by the fifth MCS information. For another example, a modulation order indicated by the sixth MCS information is lower than a modulation order indicated by the fifth MCS information, and a code rate indicated by the sixth MCS information is lower than a code rate indicated by the fifth MCS information.

The implementation of the CG type 1 or CG type 2 may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the fourth MCS information included in the adjustment information sent by the radio access network device to the terminal is lower than the MCS configured by using the third MCS information in the CG configuration information, or the MCS indicated by the sixth MCS information included in the adjustment information sent by the radio access network device to the terminal is lower than the MCS indicated by the fifth MCS information in the second activation information. Optionally, the retransmission time Tretrans2 corresponding to the second CG transmission occasion is related to a slot configuration of the terminal and a terminal capability. For descriptions about that retransmission time corresponding to a CG transmission occasion is related to the slot configuration of the terminal and the terminal capability, refer to the descriptions about FIG. 9.

### Details are not described herein again.

In the implementation of the CG type 1 or CG type 2, data transmitted on the first CG transmission occasion and data transmitted on the second CG transmission occasion may belong to a same picture frame. When the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the adjustment information is used to indicate the terminal that a lower MCS is used on the second CG transmission occasion. In this way, reliability of data transmission on the second CG transmission occasion is improved, and a retransmission probability of the data transmitted on the second CG transmission occasion is reduced. Therefore, a data transmission delay is reduced as much as possible, and user experience in receiving data is improved.

FIG. 16 is still used as an example. There are a total of six CG transmission occasions in the CG transmission occasion cycle shown in the figure. For example, 10,000 bits of data may be transmitted on each first CG transmission occasion configured by using the CG configuration information, and the transmitted picture frame has a total of 50,000 bits of data. FIG. 16 further shows the latest receiving moment Tlatest2 of the picture frame, the moment Tsecond2 of the second CG transmission occasion, and the retransmission time Tretrans2 corresponding to the second CG transmission occasion. The radio access network device transmits a total of 40,000 bits of data on the first four first CG transmission occasions in the CG transmission occasion cycle. The case shown in FIG. 9 is used as an example. For the last two CG transmission occasions in the CG transmission occasion cycle, impact of a delay constraint required by the picture frame causes Tlatest2-Tsecond2<Tretrans2. In addition, resources on the two CG transmission occasions are sufficient to carry the remaining 10,000 bits of the picture frame. Therefore, the radio access network device may send the adjustment information to the terminal, to indicate, to the terminal, that MCSs are temporarily reduced for data transmission on the two second CG transmission occasions. For example, 5,000 bits of data may be carried on each second CG transmission occasion after the MCSs are reduced. Therefore, reliability of data transmission on the two second CG transmission occasions can be improved, and a retransmission probability of data transmitted on the two second CG transmission occasions can be reduced, to avoid, as far as possible, a receiving failure of the entire picture frame caused by the fact that retransmission needs to be performed but retransmission cannot be completed within specified time.

In a possible implementation of the CG type 1, in addition to the third MCS information, the CG configuration information further includes third FDRA information. In addition to the fourth MCS information, the adjustment information further includes fourth FDRA information. The third FDRA information is used to configure a frequency domain resource on each of the one or more first CG transmission occasions, and the fourth FDRA information indicates a frequency domain resource on each of the one or more second CG transmission occasions. Optionally, frequency domain resources indicated by the fourth FDRA information are more than frequency domain resources configured by using the third FDRA information.

In a possible implementation of the CG type 2, in addition to the fifth MCS information, the second activation information further includes fifth FDRA information. In addition to the sixth MCS information, the adjustment information further includes sixth FDRA information. The fifth FDRA information indicates a frequency domain resource on each of the one or more first CG transmission occasions, and the sixth FDRA information indicates a frequency domain resource on each of the one or more second CG transmission occasions. Optionally, frequency domain resources indicated by the sixth FDRA information are more than frequency domain resources indicated by using the fifth FDRA information.

The implementation of the CG type 1 or CG type 2 may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the fourth MCS information included in the adjustment information sent by the radio access network device to the terminal is lower than the MCS configured by using the third MCS information in the CG configuration information, and the frequency domain resources indicated by the fourth FDRA information included in the adjustment information are more than the frequency domain resources configured by using the third FDRA information in the CG configuration information. Alternatively, the MCS indicated by the sixth MCS information included in the adjustment information sent by the radio access network device to the terminal is lower than the MCS indicated by the fifth MCS information in the second activation information, and the frequency domain resources indicated by the sixth FDRA information included in the adjustment information are more than the frequency domain resources indicated by the fifth FDRA information in the second activation information. Optionally, the retransmission time Tretrans2 corresponding to the second CG transmission occasion is related to the slot configuration of the terminal and the terminal capability. For descriptions about that the retransmission time corresponding to the CG transmission occasion is related to the slot configuration of the terminal and the terminal capability, refer to the descriptions about FIG. 9. Details are not described herein again.

In the implementation of the CG type 1 or CG type 2, the data transmitted on the first CG transmission occasion and the data transmitted on the second CG transmission occasion may belong to the same picture frame. When resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, more resources are allocated to the second CG transmission occasion. In this way, the reliability of data transmission on the second CG transmission occasion is improved, and the retransmission probability of the data transmitted on the second CG transmission occasion is reduced. Therefore, the data transmission delay is reduced as much as possible, and user experience in receiving data is improved.

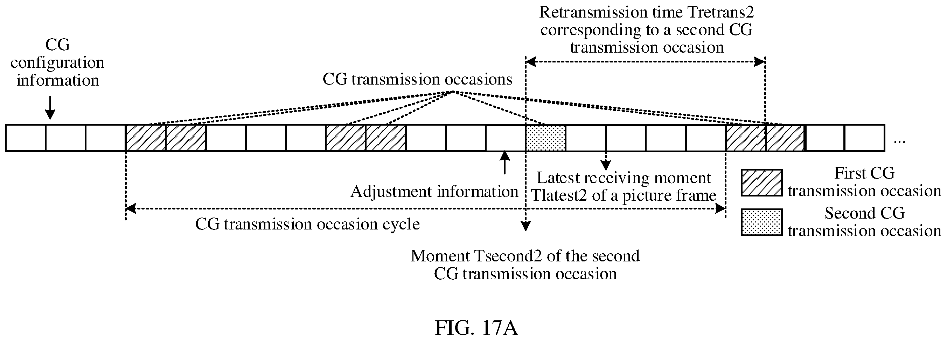

FIG. 17A is used as an example. There are a total of five CG transmission occasions in a CG transmission occasion cycle shown in the figure. For example, 10,000 bits of data may be transmitted on each first CG transmission occasion configured by using the CG configuration information, and the transmitted picture frame has a total of 50,000 bits of data. FIG. 17A further shows the latest receiving moment Tlatest2 of the picture frame, the moment Tsecond2 of the second CG transmission occasion, and the retransmission time Tretrans2 corresponding to the second CG transmission occasion. The radio access network device transmits a total of 40,000 bits of data on the first four first CG transmission occasions in the CG transmission occasion cycle. For the last CG transmission occasion in the CG transmission occasion cycle, a reason similar to that described in FIG. 9 is used as an example, and the impact of the delay constraint required by the picture frame causes Tlatest2-Tsecond2<Tretrans2. In this case, if an MCS on the second CG transmission occasion is reduced by using the adjustment information, a quantity of bits that can be carried on the second CG transmission occasion is reduced, and the remaining 10,000 bits cannot be carried. Therefore, in this case, in addition to the fourth MCS information/sixth MCS information used to reduce the MCS on the second CG transmission occasion, the adjustment information further includes the fourth FDRA information/sixth FDRA information used to temporarily add a frequency domain resource to the second CG transmission occasion, to carry the remaining 10,000 bits when the MCS on the second CG transmission occasion is reduced. In addition, because the MCS is reduced, reliability of data transmission on the second CG transmission occasion can be improved, and a retransmission probability of data transmitted on the second CG transmission occasion can be reduced, to avoid, as far as possible, the receiving failure of the entire picture frame caused by the fact that retransmission needs to be performed but retransmission cannot be completed within the specified time.

In a possible implementation of the CG type 1, in addition to sending the CG configuration information including the third MCS information and the adjustment information including the fourth MCS information to the terminal, the method 1500 further includes: sending, by the radio access network device, second scheduling information to the terminal, where the second scheduling information is used to schedule data transmission on a time domain resource other than the plurality of CG transmission occasions; and performing data transmission with the terminal on the time domain resource other than the plurality of CG transmission occasions. Correspondingly, the terminal receives the second scheduling information, and performs, based on the second scheduling information, data transmission with the radio access network device on the time domain resource other than the plurality of CG transmission occasions. In this application, data transmission on the time domain resource other than the CG transmission occasion may also be referred to as non-CG data transmission.

In a possible implementation of the CG type 2, in addition to sending the second activation information including the fifth MCS information and the adjustment information including the sixth MCS information to the terminal, the method 1500 further includes: sending, by the radio access network device, third scheduling information to the terminal, where the third scheduling information is used to schedule data transmission on a time domain resource other than the plurality of CG transmission occasions; and performing data transmission with the terminal on the time domain resource other than the plurality of CG transmission occasions. Correspondingly, the terminal receives the third scheduling information, and performs, based on the third scheduling information, data transmission with the radio access network device on the time domain resource other than the plurality of CG transmission occasions.

In the implementation of the CG type 1 or CG type 2, the data transmitted on the first CG transmission occasion and the data transmitted on the second CG transmission occasion may belong to the same picture frame. When the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, a resource other than the CG transmission occasion is additionally scheduled for transmitting data of the picture frame. Therefore, the data transmission delay is reduced as much as possible, and user experience in receiving data is improved.

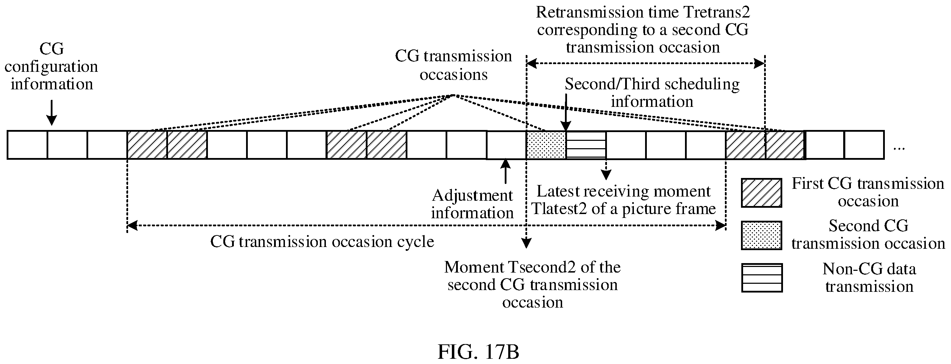

FIG. 17B is used as an example. There are a total of five SPS transmission occasions in a CG transmission occasion cycle shown in the figure. For example, 10,000 bits of data may be transmitted on each first CG transmission occasion configured by using the CG configuration information, and the transmitted picture frame has a total of 50,000 bits of data. FIG. 17B further shows the latest receiving moment Tlatest2 of the picture frame, the moment Tsecond2 of the second CG transmission occasion, and the retransmission time Tretrans2 corresponding to the second CG transmission occasion. The radio access network device transmits a total of 40,000 bits of data on the first four first CG transmission occasions in the CG transmission occasion cycle. For the last CG transmission occasion in the CG transmission occasion cycle, a reason similar to that described in FIG. 9 is used as an example, and the impact of the delay constraint required by the picture frame causes Tlatest2-Tsecond2<Tretrans2. In this case, if an MCS on the second CG transmission occasion is reduced by using the adjustment information, a quantity of bits that can be carried on the second CG transmission occasion is reduced, for example, is reduced to 5,000 bits. Therefore, in this case, in addition to sending the adjustment information including the second MCS information to the terminal, the radio access network device further sends the second scheduling information/third scheduling information to the terminal, to schedule a time domain resource (shown by horizontal stripes in the figure) other than the CG transmission occasion, to carry all the remaining 5,000 bits on the additionally scheduled time domain resource. Because the MCS on the second CG transmission occasion is reduced, reliability of data transmission on the second CG transmission occasion can be improved, and a retransmission probability of data transmitted on the second CG transmission occasion can be reduced, to avoid, as far as possible, the receiving failure of the entire picture frame caused by the fact that retransmission needs to be performed but retransmission cannot be completed within the specified time.

Optionally, the method 1500 further includes: The radio access network device sends CG deactivation information to the terminal, where the CG deactivation information is used to deactivate the CG configuration. The terminal receives the CG deactivation information, and stops/suspends, based on the CG deactivation information, uplink data sending on the CG transmission occasion. The CG deactivation information may be included in the DCI, and is carried by the PDCCH.

Corresponding to the method provided in the foregoing method embodiment, an embodiment of this application further provides a corresponding apparatus, including a corresponding module configured to perform the foregoing embodiment. The module may be software, hardware, or a combination of software and hardware.

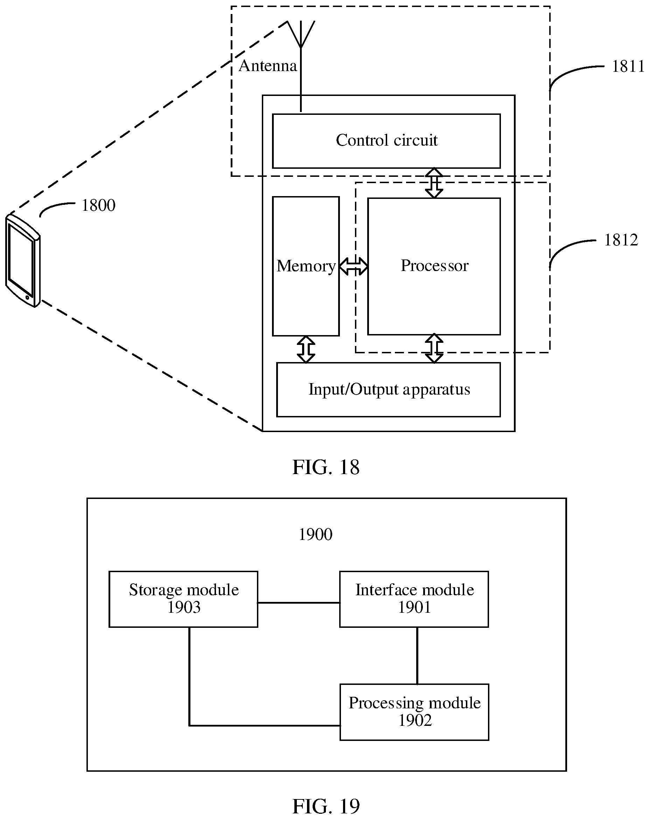

FIG. 18 is a diagram of a structure of a terminal. The terminal is applicable to the scenario shown in FIG. 1, FIG. 2, FIG. 3, FIG. 4, or FIG. 5. The terminal or a component in the terminal may perform the method 1000, the method 1200, the method 1500, and various possible implementations. For ease of description, FIG. 18 shows only main components of the terminal. As shown in FIG. 18, the terminal 1800 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form via the antenna. When data is sent to the terminal, the radio frequency circuit receives a radio frequency signal via the antenna, further converts the radio frequency signal into a baseband signal, and outputs the baseband signal to the processor. The processor converts the baseband signal into data, and processes the data.

For ease of description, FIG. 18 shows only one memory and one processor. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 18 integrates functions of the baseband processor and the central processing unit. A person skilled in the art may understand that the baseband processor and the central processing unit may be respectively independent processors, and are interconnected through technologies such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a receiving function and a sending function may be considered as a transceiver unit 1811 of the terminal 1800, and the processor having a processing function may be considered as a processing unit 1812 of the terminal 1800. As shown in FIG. 18, the terminal 1800 includes the transceiver unit 1811 and the processing unit 1812. The transceiver unit may also be referred to as a transceiver, a transceiver machine, a transceiver apparatus, or the like. Optionally, a component that is in the transceiver unit 1811 and that is configured to implement the receiving function may be considered as a receiving unit, and a component that is in the transceiver unit 1811 and that is configured to implement the sending function may be considered as a sending unit. In other words, the transceiver unit 1811 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

As shown in FIG. 19, still another embodiment of this application provides an apparatus 1900. The apparatus may be a terminal, or may be a component (for example, an integrated circuit or a chip) of a terminal. Alternatively, the apparatus may be a radio access network device, a component (for example, an integrated circuit or a chip) of a network device, or a logical module or software that can implement all or some functions of a radio access network device. The apparatus may alternatively be another communication module. For example, the apparatus 1900 may implement functions of the radio access network device in the method 1000, the method 1200, and the method 1500, or the apparatus 1900 may implement functions of the terminal in the method 1000, the method 1200, and the method 1500. The apparatus 1900 may include an interface module 1901 (or referred to as an interface unit) and a processing module 1902 (or referred to as a processing unit), and may further include a storage module 1903 (or referred to as a storage unit).

In a possible design, one or more modules in FIG. 19 may be implemented by one or more processors, may be implemented by one or more processors and one or more memories, may be implemented by one or more processors and one or more transceivers, or may be implemented by one or more processors, one or more memories, and one or more transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used by the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

In a possible design, the apparatus 1900 includes the processing module 1902 and the interface module 1901. For example, the apparatus 1900 may be a terminal, may be a component (for example, a processor, a chip, or a chip system) of a terminal, or may be a logical module or software that can implement all or some functions of a terminal. The interface module 1901 is configured to receive configuration information from a network device, where the configuration information is used to configure a plurality of transmission occasions. The processing module 1902 is configured to control the apparatus 1900 to perform data transmission with the network device on one or more first transmission occasions, where the one or more first transmission occasions are some of the plurality of transmission occasions. The interface module 1901 is further configured to receive adjustment information from the network device. The processing module 1902 is further configured to control, based on the adjustment information, the apparatus 1900 to perform data transmission with the network device on one or more second transmission occasions, where the one or more second transmission occasions are some of the plurality of transmission occasions, and the one or more second transmission occasions are different from the one or more first transmission occasions.

In some possible implementations of the apparatus 1900, the configuration information is SPS configuration information, the transmission occasion is an SPS transmission occasion, the first transmission occasion is a first SPS transmission occasion, and the second transmission occasion is a second SPS transmission occasion. The interface module 1901 is further configured to receive first activation information from the network device. That the processing module 1902 is configured to control the apparatus 1900 to perform data transmission with the network device on the one or more first transmission occasions includes: The processing module 1902 is configured to control, based on the first activation information, the apparatus 1900 to perform data transmission with the network device on the one or more first transmission occasions.

In some possible implementations of the apparatus 1900, the first activation information includes first MCS information, and the adjustment information includes second MCS information. The first MCS information indicates an MCS on each of the one or more first SPS transmission occasions, and the second MCS information indicates an MCS on each of the one or more second SPS transmission occasions. Optionally, the MCS indicated by the second MCS information is lower than the MCS indicated by the first MCS information. This implementation may be understood as follows: When a latest receiving moment Tlatest1 of a picture frame, a moment Tsecond1 of the second SPS transmission occasion, and retransmission time Tretrans1 corresponding to the second SPS transmission occasion satisfy Tlatest1-Tsecond1 <Tretrans 1, the MCS indicated by the second MCS information included in the adjustment information sent by the radio access network device to the terminal is lower than the MCS indicated by the first MCS information in the first activation information. Optionally, the retransmission time Tretrans1 corresponding to the second SPS transmission occasion is related to a slot configuration of the terminal and a terminal capability. In this implementation, data transmitted on the first SPS transmission occasion and data transmitted on the second SPS transmission occasion may belong to a same picture frame, the second SPS transmission occasion includes sufficient resources, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1.

In some possible implementations of the apparatus 1900, in addition to the first MCS information, the first activation information further includes first FDRA information. In addition to the second MCS information, the adjustment information further includes second FDRA information. The first FDRA information indicates a frequency domain resource on each of the one or more first SPS transmission occasions, and the second FDRA information indicates a frequency domain resource on each of the one or more second SPS transmission occasions. Optionally, frequency domain resources indicated by the second FDRA information are more than frequency domain resources indicated by the first FDRA information. This implementation may be understood as follows: When the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the MCS indicated by the second MCS information included in the adjustment information sent by the radio access network device to the terminal is lower than the MCS indicated by the first MCS information in the first activation information, and the frequency domain resources indicated by the second FDRA information included in the adjustment information are more than the frequency domain resources indicated by the first FDRA information in the first activation information. Optionally, the retransmission time Tretrans1 corresponding to the second SPS transmission occasion is related to the slot configuration of the terminal and the terminal capability. In this implementation, the data transmitted on the first SPS transmission occasion and the data transmitted on the second SPS transmission occasion may belong to the same picture frame, resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans 1.

In some possible implementations of the apparatus 1900, in addition to receiving the first activation information including the first MCS information and the adjustment information including the second MCS information, the interface module 1901 is further configured to receive first scheduling information from the network device. The processing module 1902 is further configured to control, based on the first scheduling information, the apparatus 1900 to perform data transmission with the network device on a time domain resource other than the plurality of SPS transmission occasions. In this implementation, the data transmitted on the first SPS transmission occasion and the data transmitted on the second SPS transmission occasion may belong to the same picture frame, the resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1 <Tretrans 1.

In some possible implementations of the apparatus 1900, the first activation information is scrambled by using a first RNTI, and the adjustment information is scrambled by using a second RNTI. The first RNTI is different from the second RNTI; or the first RNTI is the same as the second RNTI, both the adjustment information and the first activation information include a first field, and the first field in the adjustment information is set to a predetermined value.

In some possible implementations of the apparatus 1900, the configuration information is CG configuration information, the transmission occasion is a CG transmission occasion, the first transmission occasion is a first CG transmission occasion, and the second transmission occasion is a second CG transmission occasion. Optionally, that the processing module 1902 is configured to control the apparatus 1900 to perform data transmission with the network device on the one or more first transmission occasions includes: The processing module 1902 is configured to control, based on the CG configuration information, the apparatus 1900 to perform data transmission with the network device on the one or more first CG transmission occasions.

In some possible implementations of the apparatus 1900, the CG configuration information may include third MCS information, and the adjustment information may include fourth MCS information. The third MCS information is used to configure an MCS on each of the one or more first CG transmission occasions, and the fourth MCS information indicates an MCS on each of the one or more second CG transmission occasions. Optionally, the MCS indicated by the fourth MCS information is lower than the MCS configured by using the third MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the fourth MCS information included in the adjustment information sent by the radio access network device to the terminal is lower than the MCS configured by using the third MCS information in the CG configuration information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame, the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to the third MCS information, the CG configuration information further includes third FDRA information. In addition to the fourth MCS information, the adjustment information further includes fourth FDRA information. The third FDRA information is used to configure a frequency domain resource on each of the one or more first CG transmission occasions, and the fourth FDRA information indicates a frequency domain resource on each of the one or more second CG transmission occasions. Optionally, frequency domain resources indicated by the fourth FDRA information are more than frequency domain resources configured by using the third FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the fourth MCS information included in the adjustment information sent by the radio access network device to the terminal is lower than the MCS configured by using the third MCS information in the CG configuration information, and the frequency domain resources indicated by the fourth FDRA information included in the adjustment information are more than the frequency domain resources configured by using the third FDRA information in the CG configuration information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame, resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to receiving the CG configuration information including the third MCS information and the adjustment information including the fourth MCS information, the interface module 1901 is further configured to receive second scheduling information from the network device. The processing module 1902 is further configured to control, based on the second scheduling information, the apparatus 1900 to perform data transmission with the network device on a time domain resource other than the plurality of CG transmission occasions. In this implementation, the data transmitted on the first CG transmission occasion and the data transmitted on the second CG transmission occasion may belong to the same picture frame, the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, the interface module 1901 is further configured to receive second activation information from the network device. That the processing module 1902 is configured to control the apparatus 1900 to perform data transmission with the network device on the one or more first transmission occasions includes: The processing module 1902 is configured to control, based on the second activation information, the apparatus 1900 to perform data transmission with the network device on the one or more first CG transmission occasions. Optionally, the second activation information includes fifth MCS information, and the adjustment information includes sixth MCS information. The fifth MCS information indicates an MCS on each of the one or more first CG transmission occasions, and the sixth MCS information indicates an MCS on each of the one or more second CG transmission occasions. Optionally, the MCS indicated by the sixth MCS information is lower than the MCS indicated by using the fifth MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the sixth MCS information included in the adjustment information sent by the radio access network device to the terminal is lower than the MCS indicated by the fifth MCS information in the second activation information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame, the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to the fifth MCS information, the second activation information further includes fifth FDRA information. In addition to the sixth MCS information, the adjustment information further includes sixth FDRA information. The fifth FDRA information indicates a frequency domain resource on each of the one or more first CG transmission occasions, and the sixth FDRA information indicates a frequency domain resource on each of the one or more second CG transmission occasions. Optionally, frequency domain resources indicated by the sixth FDRA information are more than frequency domain resources indicated by using the fifth FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the sixth MCS information included in the adjustment information sent by the radio access network device to the terminal is lower than the MCS indicated by the fifth MCS information in the second activation information, and the frequency domain resources indicated by the sixth FDRA information included in the adjustment information are more than the frequency domain resources indicated by the fifth FDRA information in the second activation information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame, resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to receiving the second activation information including the fifth MCS information and the adjustment information including the sixth MCS information, the interface module 1901 is further configured to receive third scheduling information from the network device. The processing module 1902 is further configured to control, based on the third scheduling information, the apparatus 1900 to perform data transmission with the network device on a time domain resource other than the plurality of CG transmission occasions. In this implementation, the data transmitted on the first CG transmission occasion and the data transmitted on the second CG transmission occasion may belong to the same picture frame, the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, the second activation information is scrambled by using a third RNTI, and the adjustment information is scrambled by using a fourth RNTI. The third RNTI is different from the fourth RNTI; or the third RNTI is the same as the fourth RNTI, both the adjustment information and the second activation information include a second field, and the second field in the adjustment information is set to a predetermined value.

In another possible design, the apparatus 1900 includes the processing module 1902 and the interface module 1901. For example, the apparatus 1900 may be a radio access network device, may be a component (for example, a processor, a chip, or a chip system) of a radio access network device, or may be a logical module or software that can implement all or some functions of a radio access network device. The interface module 1901 is configured to send configuration information to a terminal, where the configuration information is used to configure a plurality of transmission occasions. The processing module 1902 is configured to control the apparatus 1900 to perform data transmission with the terminal on one or more first transmission occasions, where the one or more first transmission occasions are some of the plurality of transmission occasions. The interface module 1901 is further configured to send adjustment information to the terminal, where the adjustment information indicates data transmission on one or more second transmission occasions, the one or more second transmission occasions are some of the plurality of transmission occasions, and the one or more second transmission occasions are different from the one or more first transmission occasions. The processing module 1902 is further configured to control the apparatus 1900 to perform data transmission with the terminal on the one or more second transmission occasions.

In some possible implementations of the apparatus 1900, the configuration information is SPS configuration information, the transmission occasion is an SPS transmission occasion, the first transmission occasion is a first SPS transmission occasion, and the second transmission occasion is a second SPS transmission occasion. The interface module 1901 is further configured to send first activation information to the terminal, where the first activation information is used to activate data transmission on the one or more first SPS transmission occasions.

In some possible implementations of the apparatus 1900, the first activation information includes first MCS information, and the adjustment information includes second MCS information. The first MCS information indicates an MCS on each of the one or more first SPS transmission occasions, and the second MCS information indicates an MCS on each of the one or more second SPS transmission occasions. Optionally, the MCS indicated by the second MCS information is lower than the MCS indicated by the first MCS information. This implementation may be understood as follows: When a latest receiving moment Tlatest1 of a picture frame, a moment Tsecond1 of the second SPS transmission occasion, and retransmission time Tretrans1 corresponding to the second SPS transmission occasion satisfy Tlatest1-Tsecond1<Tretrans1, the MCS indicated by the second MCS information included in the adjustment information sent by the radio access network device to the terminal is lower than the MCS indicated by the first MCS information in the first activation information. Optionally, the retransmission time Tretrans1 corresponding to the second SPS transmission occasion is related to a slot configuration of the terminal and a terminal capability. In this implementation, data transmitted on the first SPS transmission occasion and data transmitted on the second SPS transmission occasion may belong to a same picture frame, the second SPS transmission occasion includes sufficient resources, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1.

In some possible implementations of the apparatus 1900, in addition to the first MCS information, the first activation information further includes first FDRA information. In addition to the second MCS information, the adjustment information further includes second FDRA information. The first FDRA information indicates a frequency domain resource on each of the one or more first SPS transmission occasions, and the second FDRA information indicates a frequency domain resource on each of the one or more second SPS transmission occasions. Optionally, frequency domain resources indicated by the second FDRA information are more than frequency domain resources indicated by the first FDRA information. This implementation may be understood as follows: When the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1, the MCS indicated by the second MCS information included in the adjustment information sent by the radio access network device to the terminal is lower than the MCS indicated by the first MCS information in the first activation information, and the frequency domain resources indicated by the second FDRA information included in the adjustment information are more than the frequency domain resources indicated by the first FDRA information in the first activation information. Optionally, the retransmission time Tretrans1 corresponding to the second SPS transmission occasion is related to the slot configuration of the terminal and the terminal capability. In this implementation, the data transmitted on the first SPS transmission occasion and the data transmitted on the second SPS transmission occasion may belong to the same picture frame, resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1.

In some possible implementations of the apparatus 1900, in addition to sending the first activation information including the first MCS information and the adjustment information including the second MCS information to the terminal, the interface module 1901 is further configured to send first scheduling information to the terminal, where the first scheduling information is used to schedule data transmission on a time domain resource other than the plurality of SPS transmission occasions. The processing module 1902 is further configured to control the apparatus 1900 to perform data transmission with the terminal on the time domain resource other than the plurality of SPS transmission occasions. In this implementation, the data transmitted on the first SPS transmission occasion and the data transmitted on the second SPS transmission occasion may belong to the same picture frame, the resources included in the second SPS transmission occasion are insufficient, and the latest receiving moment Tlatest1 of the picture frame, the moment Tsecond1 of the second SPS transmission occasion, and the retransmission time Tretrans1 corresponding to the second SPS transmission occasion satisfy Tlatest1-Tsecond1<Tretrans1.

In some possible implementations of the apparatus 1900, the first activation information is scrambled by using a first radio network temporary identifier RNTI, and the adjustment information is scrambled by using a second RNTI. The first RNTI is different from the second RNTI; or the first RNTI is the same as the second RNTI, both the adjustment information and the first activation information include a first field, and the first field in the adjustment information is set to a predetermined value.

In some possible implementations of the apparatus 1900, the configuration information is CG configuration information, the transmission occasion is a CG transmission occasion, the first transmission occasion is a first CG transmission occasion, and the second transmission occasion is a second CG transmission occasion. Optionally, that the processing module 1902 is configured to control the apparatus 1900 to perform data transmission with the terminal on the one or more first transmission occasions includes: The processing module 1902 is configured to control, based on the CG configuration information, the apparatus 1900 to perform data transmission with the terminal on the one or more first CG transmission occasions.

In some possible implementations of the apparatus 1900, the CG configuration information may include third MCS information, and the adjustment information may include fourth MCS information. The third MCS information is used to configure an MCS on each of the one or more first CG transmission occasions, and the fourth MCS information indicates an MCS on each of the one or more second CG transmission occasions. Optionally, the MCS indicated by the fourth MCS information is lower than the MCS configured by using the third MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the fourth MCS information included in the adjustment information sent by the radio access network device to the terminal is lower than the MCS configured by using the third MCS information in the CG configuration information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame, the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to the third MCS information, the CG configuration information further includes third FDRA information. In addition to the fourth MCS information, the adjustment information further includes fourth FDRA information. The third FDRA information is used to configure a frequency domain resource on each of the one or more first CG transmission occasions, and the fourth FDRA information indicates a frequency domain resource on each of the one or more second CG transmission occasions. Optionally, frequency domain resources indicated by the fourth FDRA information are more than frequency domain resources configured by using the third FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the fourth MCS information included in the adjustment information sent by the radio access network device to the terminal is lower than the MCS configured by using the third MCS information in the CG configuration information, and the frequency domain resources indicated by the fourth FDRA information included in the adjustment information are more than the frequency domain resources configured by using the third FDRA information in the CG configuration information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame, resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to sending the CG configuration information including the third MCS information and the adjustment information including the fourth MCS information to the terminal, the interface module 1901 is further configured to send second scheduling information to the terminal, where the second scheduling information is used to schedule data transmission on a time domain resource other than the plurality of CG transmission occasions. The processing module 1902 is further configured to control the apparatus 1900 to perform data transmission with the terminal on the time domain resource other than the plurality of CG transmission occasions. In this implementation, the data transmitted on the first CG transmission occasion and the data transmitted on the second CG transmission occasion may belong to the same picture frame, the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, the interface module 1901 is further configured to send second activation information to the terminal. That the processing module 1902 is configured to control the apparatus 1900 to perform data transmission with the terminal on the one or more first transmission occasions includes: The processing module 1902 is configured to control, based on the second activation information, the apparatus 1900 to perform data transmission with the terminal on the one or more first CG transmission occasions. Optionally, the second activation information includes fifth MCS information, and the adjustment information includes sixth MCS information. The fifth MCS information indicates an MCS on each of the one or more first CG transmission occasions, and the sixth MCS information indicates an MCS on each of the one or more second CG transmission occasions. Optionally, the MCS indicated by the sixth MCS information is lower than the MCS indicated by using the fifth MCS information. This implementation may be understood as follows: When a latest receiving moment Tlatest2 of a picture frame, a moment Tsecond2 of the second CG transmission occasion, and retransmission time Tretrans2 corresponding to the second CG transmission occasion satisfy Tlatest2-Tsecond2<Tretrans2, the MCS indicated by the sixth MCS information included in the adjustment information sent by the radio access network device to the terminal is lower than the MCS indicated by the fifth MCS information in the second activation information. Optionally, the retransmission time Tretrans2 corresponding to the second CG transmission occasion is related to a slot configuration of the terminal and a terminal capability. In this implementation, data transmitted on the first CG transmission occasion and data transmitted on the second CG transmission occasion may belong to a same picture frame, the second CG transmission occasion includes sufficient resources, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to the fifth MCS information, the second activation information further includes fifth FDRA information. In addition to the sixth MCS information, the adjustment information further includes sixth FDRA information. The fifth FDRA information indicates a frequency domain resource on each of the one or more first CG transmission occasions, and the sixth FDRA information indicates a frequency domain resource on each of the one or more second CG transmission occasions. Optionally, frequency domain resources indicated by the sixth FDRA information are more than frequency domain resources indicated by using the fifth FDRA information. This implementation may be understood as follows: When the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2, the MCS indicated by the sixth MCS information included in the adjustment information sent by the radio access network device to the terminal is lower than the MCS indicated by the fifth MCS information in the second activation information, and the frequency domain resources indicated by the sixth FDRA information included in the adjustment information are more than the frequency domain resources indicated by the fifth FDRA information in the second activation information. Optionally, the retransmission time Tretrans2 corresponding to the second CG transmission occasion is related to the slot configuration of the terminal and the terminal capability. In this implementation, the data transmitted on the first CG transmission occasion and the data transmitted on the second CG transmission occasion may belong to the same picture frame, resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, in addition to sending the second activation information including the fifth MCS information and the adjustment information including the sixth MCS information to the terminal, the interface module 1901 is further configured to send third scheduling information to the terminal, where the third scheduling information is used to schedule data transmission on a time domain resource other than the plurality of CG transmission occasions. The processing module 1902 is further configured to control the apparatus 1900 to perform data transmission with the terminal on the time domain resource other than the plurality of CG transmission occasions. In this implementation, the data transmitted on the first CG transmission occasion and the data transmitted on the second CG transmission occasion may belong to the same picture frame, the resources included in the second CG transmission occasion are insufficient, and the latest receiving moment Tlatest2 of the picture frame, the moment Tsecond2 of the second CG transmission occasion, and the retransmission time Tretrans2 corresponding to the second CG transmission occasion satisfy Tlatest2-Tsecond2<Tretrans2.

In some possible implementations of the apparatus 1900, the second activation information is scrambled by using a third RNTI, and the adjustment information is scrambled by using a fourth RNTI. The third RNTI is different from the fourth RNTI; or the third RNTI is the same as the fourth RNTI, both the adjustment information and the second activation information include a second field, and the second field in the adjustment information is set to a predetermined value.

It may be understood that for beneficial effects corresponding to the apparatus 1900 and various possible implementations, refer to the descriptions in the foregoing method embodiment or inventive content. Details are not described herein again.

Optionally, the apparatus 1900 may further include the storage module 1903, configured to store data or instructions (which may also be referred to as code or a program). The other modules may interact with or be coupled to the storage module, to implement corresponding methods or functions. For example, the processing module 1902 may read the data or the instructions in the storage module 1903, so that the apparatus 1900 implements the method in the foregoing embodiment.

In an example, the module in the foregoing apparatus may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented by a processing element by scheduling a program, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

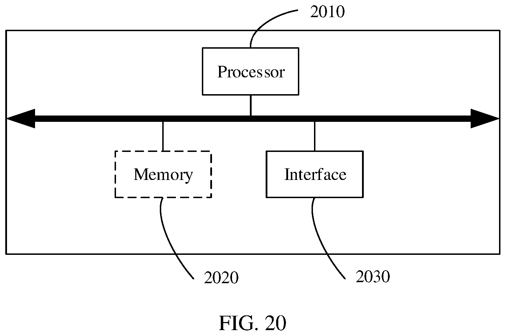

FIG. 20 is a diagram of an apparatus according to an embodiment of this application. The apparatus may be configured to implement the method 1000, the method 1200, the method 1500, and various possible implementations. As shown in FIG. 20, the apparatus includes a processor 2010 and an interface 2030. The processor 2010 is coupled to the interface 2030. The interface 2030 is configured to communicate with another module or device. The interface 2030 may be a transceiver or an input/output interface. The interface 2030 may be, for example, an interface circuit. Optionally, the apparatus further includes a memory 2020, configured to store instructions executed by the processor 2010, input data required by the processor 2010 to run instructions, or data generated after the processor 2010 runs instructions.

The method 1000, the method 1200, the method 1500, and various possible implementations may be implemented by the processor 2010 by invoking a program or instructions stored in the memory 2020. The memory 2020 may be inside the apparatus, or may be outside the apparatus. This is not limited in this application.

Optionally, a function/implementation process of the interface module 1901 and the processing module 1902 in FIG. 19 may be implemented by the processor 2010 in the apparatus shown in FIG. 20. Alternatively, a function/implementation process of the processing module 1902 in FIG. 19 may be implemented by the processor 2010 in the apparatus shown in FIG. 20, and a function/implementation process of the interface module 1901 in FIG. 19 may be implemented by the interface 2030 in the apparatus shown in FIG. 20. For example, the function/implementation process of the interface module 1901 may be implemented by the processor by invoking the program instructions in the memory to drive the interface 2030.

When the apparatus is a chip used in a terminal, the chip in the terminal implements functions of the terminal in the foregoing method embodiment. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in a radio access network device, the chip implements functions of the radio access network device in the foregoing method embodiment. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not intended to limit the scope of embodiments of this application or represent a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that in embodiments of this application, sequence numbers of the foregoing processes do not mean execution sequences. The execution sequences of the processes should be determined based on functions and internal logic of the processes, and should not be construed as any limitation on the implementation processes of embodiments of this application.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, including one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Steps of the method described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk, a removable disk, or a storage medium in any other form in the art. For example, the storage medium may be connected to the processor, so that the processor may read information from the storage medium and write information to the storage medium. Alternatively, the storage medium may be integrated into the processor. The processor and the storage media may be disposed in an ASIC.

This application further provides a computer-readable medium. The computer-readable medium stores a computer program. When the computer program is executed by a computer, functions in any one of the foregoing method embodiments are implemented.

This application further provides a computer program product. When the computer program product is executed by a computer, functions in any one of the foregoing method embodiments are implemented.

For same or similar parts in embodiments of this application, refer to each other. In embodiments of this application and the implementations/methods/implementation methods in embodiments, unless otherwise specified or if there is a logic conflict, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship of the technical features. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data transmission method, wherein the method comprises:
receiving configuration information from a network device, wherein the configuration information is used to configure a plurality of transmission occasions;
performing data transmission with the network device on one or more first transmission occasions, wherein the one or more first transmission occasions are some of the plurality of transmission occasions;
receiving adjustment information from the network device; and
performing data transmission with the network device on one or more second transmission occasions based on the adjustment information, wherein the one or more second transmission occasions are some of the plurality of transmission occasions, and the one or more second transmission occasions are different from the one or more first transmission occasions.

2. The method according to claim 1, wherein the configuration information is semi-persistent scheduling SPS configuration information, the transmission occasion is an SPS transmission occasion, the first transmission occasion is a first SPS transmission occasion, and the second transmission occasion is a second SPS transmission occasion;
the method further comprises: receiving first activation information from the network device; and
the performing data transmission with the network device on one or more first transmission occasions comprises:
performing data transmission with the network device on the one or more first SPS transmission occasions based on the first activation information.

3. The method according to claim 2, wherein the first activation information comprises first modulation and coding scheme MCS information, and the adjustment information comprises second MCS information; and
the first MCS information indicates an MCS on each of the one or more first SPS transmission occasions, and the second MCS information indicates an MCS on each of the one or more second SPS transmission occasions.

4. The method according to claim 3, wherein the MCS indicated by the second MCS information is lower than the MCS indicated by the first MCS information.

5. The method according to claim 3 or 4, wherein the first activation information further comprises first frequency domain resource allocation FDRA information, and the adjustment information further comprises second FDRA information; and
the first FDRA information indicates a frequency domain resource on each of the one or more first SPS transmission occasions, and the second FDRA information indicates a frequency domain resource on each of the one or more second SPS transmission occasions.

6. The method according to claim 5, wherein frequency domain resources indicated by the second FDRA information are more than frequency domain resources indicated by the first FDRA information.

7. The method according to claim 4 or 6, wherein data transmitted on the first SPS transmission occasion and data transmitted on the second SPS transmission occasion belong to a same picture frame, and a latest receiving moment Tlatest1 of the picture frame, a moment Tsecond1 of the second SPS transmission occasion, and retransmission time Tretrans1 corresponding to the second SPS transmission occasion satisfy Tlatest1-Tsecond1<Tretrans1.

8. The method according to claim 7, wherein the method is performed by a terminal or a module of the terminal, and the retransmission time Tretrans1 corresponding to the second SPS transmission occasion is related to a slot configuration of the terminal and a terminal capability.

9. The method according to any one of claims 2 to 8, wherein the first activation information is scrambled by using a first radio network temporary identifier RNTI, and the adjustment information is scrambled by using a second RNTI; and
the first RNTI is different from the second RNTI; or the first RNTI is the same as the second RNTI, both the adjustment information and the first activation information comprise a first field, and the first field in the adjustment information is set to a predetermined value.

10. The method according to claim 1, wherein the configuration information is configured grant CG configuration information, the transmission occasion is a CG transmission occasion, the first transmission occasion is a first CG transmission occasion, and the second transmission occasion is a second CG transmission occasion.

11. The method according to claim 10, wherein the performing data transmission with the network device on one or more first transmission occasions comprises:
performing data transmission with the network device on the one or more first CG transmission occasions based on the CG configuration information.

12. The method according to claim 11, wherein the CG configuration information comprises third MCS information, and the adjustment information comprises fourth MCS information; and
the third MCS information is used to configure an MCS on each of the one or more first CG transmission occasions, and the fourth MCS information indicates an MCS on each of the one or more second CG transmission occasions.

13. The method according to claim 12, wherein the MCS indicated by the fourth MCS information is lower than the MCS configured by using the third MCS information.

14. The method according to claim 12 or 13, wherein the CG configuration information further comprises third FDRA information, and the adjustment information further comprises fourth FDRA information; and
the third FDRA information is used to configure a frequency domain resource on each of the one or more first CG transmission occasions, and the fourth FDRA information indicates a frequency domain resource on each of the one or more second CG transmission occasions.

15. The method according to claim 14, wherein frequency domain resources indicated by the fourth FDRA information are more than frequency domain resources configured by using the third FDRA information.

16. The method according to claim 13 or 15, wherein data transmitted on the first CG transmission occasion and data transmitted on the second CG transmission occasion belong to a same picture frame, and a latest receiving moment Tlatest2 of the picture frame, a moment Tsecond2 of the second CG transmission occasion, and retransmission time Tretrans2 corresponding to the second CG transmission occasion satisfy Tlatest2-Tsecond2<Tretrans2.

17. The method according to claim 16, wherein the method is performed by a terminal or a module of the terminal, and the retransmission time Tretrans2 corresponding to the second CG transmission occasion is related to a slot configuration of the terminal and a terminal capability.

18. The method according to claim 10, wherein the method further comprises: receiving second activation information from the network device; and
the performing data transmission with the network device on one or more first transmission occasions comprises:
performing data transmission with the network device on the one or more first CG transmission occasions based on the second activation information.

19. The method according to claim 18, wherein the second activation information comprises fifth MCS information, and the adjustment information comprises sixth MCS information; and
the fifth MCS information indicates an MCS on each of the one or more first CG transmission occasions, and the sixth MCS information indicates an MCS on each of the one or more second CG transmission occasions.

20. The method according to claim 19, wherein the MCS indicated by the sixth MCS information is lower than the MCS indicated by using the fifth MCS information.

21. The method according to claim 19 or 20, wherein the second activation information further comprises fifth FDRA information, and the adjustment information further comprises sixth FDRA information; and
the fifth FDRA information indicates a frequency domain resource on each of the one or more first CG transmission occasions, and the sixth FDRA information indicates a frequency domain resource on each of the one or more second CG transmission occasions.

22. The method according to claim 19, wherein frequency domain resources indicated by the sixth FDRA information are more than frequency domain resources indicated by using the fifth FDRA information.

23. The method according to claim 20 or 22, wherein data transmitted on the first CG transmission occasion and data transmitted on the second CG transmission occasion belong to a same picture frame, and a latest receiving moment Tlatest2 of the picture frame, a moment Tsecond2 of the second CG transmission occasion, and retransmission time Tretrans2 corresponding to the second CG transmission occasion satisfy Tlatest2-Tsecond2<Tretrans2.

24. The method according to claim 23, wherein the method is performed by a terminal or a module of the terminal, and the retransmission time Tretrans2 corresponding to the second CG transmission occasion is related to a slot configuration of the terminal and a terminal capability.

25. The method according to any one of claims 18 to 24, wherein the second activation information is scrambled by using a third RNTI, and the adjustment information is scrambled by using a fourth RNTI; and
the third RNTI is different from the fourth RNTI; or the third RNTI is the same as the fourth RNTI, both the adjustment information and the second activation information comprise a second field, and the second field in the adjustment information is set to a predetermined value.

26. A communication apparatus, comprising a processor, wherein the processor is coupled to a memory, the memory is configured to store a program or instructions, and when the program or the instructions are executed by the processor, the apparatus is enabled to perform the method according to any one of claims 1 to 25.

27. A computer-readable storage medium, wherein the computer-readable storage medium stores instructions, and when the instructions are executed, a computer is enabled to perform the method according to any one of claims 1 to 25.

28. A computer program product, comprising computer program code, wherein when the computer program code is run, the method according to any one of claims 1 to 25 is implemented.

29. A communication apparatus, comprising a module configured to perform the method according to any one of claims 1 to 25.

30. A chip, comprising a processor, wherein the processor is coupled to a memory, the memory is configured to store instructions, and when the instructions are executed, the chip is enabled to implement the method according to any one of claims 1 to 25.
